# EUROPEAN PATENT APPLICATION

(11) **EP 1 187 038 A2**
(43) Date of publication of application: **13.03.2002**
(21) Application number: 01121399.8
(22) Date of filing: 06.09.2001
(51) Int. Cl.: G06F 17/30

(54) **Information distribution system**

(30) Priority: 06.09.2000 JP 2000269824
(71) Applicant: Pioneer Corporation, Meguro-ku, Tokyo (JP)
(72) Inventor: Nohara, Manabu, c/oPioneer Corporation, Tsurugashima-shi, Saitama 350-2288 (JP); Shioda, Takehiko, c/oPioneer Corporation, Tsurugashima-shi, Saitama 350-2288 (JP)
(74) Representative: Betten & Resch

(57) **Abstract**

An information distribution system having an information distributing apparatus of a communication provider for distributing information to mobile terminal apparatuses, wherein the information distributing apparatus searches information from a database storage device in accordance with desired conditions of the user of the mobile terminal apparatus and transmits information indicative of a search result by a radio signal, and the mobile terminal apparatus receives the radio signal and notifies the information indicative of the search result.

## Description

### 1. Field of the Invention

The invention relates to an information distribution system for distributing information which meets desired conditions such as a favorite of the user to a mobile terminal apparatus.

### 2. Description of the Related Arts

In order to collect desired information, it is a general way to see books or magazines or retrieve a Web page by using the Internet.

In recent years, the number of users of mobile terminal apparatuses such as portable terminal apparatuses (hereinafter, referred to as cellular phones) has been increasing. It is required to rapidly obtain information which meets conditions such as a favorite of the user by the mobile terminal apparatus.

### SUMMARY OF THE INVENTION

It is, therefore, an object of the invention to provide an information distribution system which can efficiently distribute information which meets desired conditions of the user to a mobile terminal apparatus.

According to the present invention, there is provided an information distribution system comprising a mobile terminal apparatus and an information distributing apparatus owned by a communication provider for distributing information to the mobile terminal apparatus, wherein: the information distributing apparatus includes database storage means in which information including various contents is stored, search means for searching the contents of the information in the database storage means in accordance with desired conditions of a user of the mobile terminal apparatus, and transmitting means for transmitting a radio signal showing the contents of a result of the search by the search means; and the mobile terminal apparatus includes notifying means for receiving the radio signal to notify the contents of the search result.

According to the present invention, there is provided an information distribution system comprising a mobile terminal apparatus, an information distributing apparatus owned by a communication provider for distributing information to the mobile terminal apparatus, and an advertisement provider apparatus for collecting information including various contents, wherein: the advertisement provider apparatus includes database storage means in which the various contents are stored and search means for searching the contents of the information in the database storage means in accordance with desired conditions of a user of the mobile terminal apparatus; the information distributing apparatus includes transmitting means for transmitting a radio signal showing the contents of a result of the search of the search means; and the mobile terminal apparatus includes notifying means for receiving the radio signal to notify the contents of the search result.

According to the present invention, there is provided an information server for distributing information to a mobile terminal apparatus, comprising: database storage means in which information including various contents is stored; search means for searching the contents of the information in the database storage means in accordance with desired conditions of a user of the mobile terminal apparatus; and output means for outputting the contents of a result of the search of the search means to the mobile terminal apparatus.

According to the present invention, there is provided a mobile terminal apparatus comprising: transmitting means for transmitting a location change notification when it is detected that a present location has been changed from a position out of a predetermined area to a position in the predetermined area; and notifying means for receiving a radio signal and notifying information included in the received radio signal.

According to the present invention, there is provided an information distributing method for distributing information to a mobile terminal apparatus, comprising the steps of: storing information including various contents as a database; searching the information contents of the database in accordance with desired conditions of the user of the mobile terminal apparatus; and transmitting the contents of a result of the search to the mobile terminal apparatus.

According to the present invention, there is provided a control method for a mobile terminal apparatus, comprising the steps of: transmitting a location change notification when it is detected that a present location has been changed from a position out of a predetermined area to a position in the predetermined area; and receiving a radio signal and notifying information included in the received radio signal.

According to the present invention, there is provided an information distribution system comprising: a first mobile terminal apparatus for transmitting user concerning information showing desired conditions of a user by a first radio signal; and an information distributing apparatus of a communication provider for collecting the user concerning information by receiving the first radio signal transmitted by the first mobile terminal apparatus in a predetermined region and for distributing information in accordance with the collected user concerning information, wherein the information distributing apparatus includes database storage means in which information including various contents has been stored, search means for searching the contents of the information in the database storage means in accordance with the desired conditions of the user indicated by the collected user concerning information, and transmitting means for transmitting a second radio signal showing the contents of a result of the search by the search means to mobile terminal apparatuses in the predetermined region, and each of the mobile terminal apparatuses in the predetermined region includes notifying means for receiving the second radio signal to notify the contents of the search result included in the received radio signal.

According to the present invention, there is provided an information distribution system comprising: a plurality of first mobile terminal apparatuses each for transmitting user concerning information showing desired conditions of a user by a first radio signal; and an information distributing apparatus of a communication provider for collecting the user concerning information by receiving the first radio signals transmitted individually from the plurality of first mobile terminal apparatuses in a predetermined region and distributing information in accordance with the collected user concerning information, wherein: the information distributing apparatus includes database storage means in which information including various contents is stored, search means for searching the contents of the information in the database storage means in accordance with the same conditions of a predetermined number or more of the desired conditions shown by the collected user concerning information, and transmitting means for transmitting a second radio signal showing the contents of a result of the search by the search means to mobile terminal apparatuses in the predetermined region; and each of the mobile terminal apparatuses in the predetermined region includes notifying means for receiving the second radio signal to notify the contents of the search result.

According to the present invention, there is provided an information distribution system comprising: a plurality of first mobile terminal apparatuses each for transmitting user concerning information showing desired conditions of a user by a first radio signal; and an information distributing apparatus of a communication provider for collecting the user concerning information by receiving the first radio signals transmitted individually from the plurality of first mobile terminal apparatuses in a predetermined region and distributing information in accordance with the collected user concerning information, wherein: the information distributing apparatus includes database storage means in which information including various contents is stored, search means for searching the contents of the information in the database storage means in accordance with the desired conditions shown by the collected user concerning information, means for forming program information in accordance with the contents of a result of the search by the search means, and transmitting means for transmitting the program information to mobile terminal apparatuses in the predetermined region by a second radio signal; and each of the mobile terminal apparatuses in the predetermined region includes notifying means for receiving the second radio signal to notify the program information.

According to the present invention, there is provided an information server for collecting user concerning information showing desired conditions of a user of a mobile terminal apparatus existing in a predetermined region and distributing information in accordance with the collected user concerning information, comprising: database storage means in which information including various contents is stored; search means for searching the contents of the information in the database storage means in accordance with the desired conditions shown by the collected user concerning information; and output means for outputting the contents of a result of the search by the search means to the mobile terminal apparatus in the predetermined region.

According to the present invention, there is provided a mobile terminal apparatus comprising: input means for accepting desired conditions of a user; transmitting means for transmitting user concerning information showing the desired conditions of the user accepted by the input means by a first radio signal; and notifying means for receiving a second radio signal and notifying information included in the second radio signal.

According to the present invention, there is provided an information server for collecting user concerning information showing desired conditions of a user of each of a plurality of mobile terminal apparatuses existing in a predetermined region and distributing information in accordance with the collected user concerning information, comprising: database storage means in which information including various contents is stored; search means for searching the contents of the information in the database storage means in accordance with the desired conditions of the user shown by the collected user concerning information; means for forming program information in accordance with the contents of each result of the search of the search means; and output means for outputting the program information to the mobile terminal apparatuses in the predetermined region.

According to the present invention, there is provided an information distributing method of collecting user concerning information showing desired conditions of a user of each mobile terminal apparatus existing in a predetermined region and distributing information in accordance with the collected user concerning information, comprising the steps of: storing information including various contents as a database; searching the contents of the database in accordance with the desired conditions shown by the collected user concerning information; and generating the contents of a result of the search by the mobile terminal apparatus in the predetermined region.

According to the present invention, there is provided a control method for a mobile terminal apparatus, comprising the steps of: accepting desired conditions of a user; transmitting user concerning information showing the accepted desired conditions of the user by a first radio signal; and receiving a second radio signal and notifying information included in the second radio signal.

According to the present invention, there is provided an information distributing method of collecting user concerning information showing desired conditions of a user of each of a plurality of mobile terminal apparatuses existing in a predetermined region and distributing information in accordance with the collected user concerning information, comprising the steps of: storing information including various contents as a database; searching the contents of the database in accordance with the desired conditions shown by the collected user concerning information; forming program information in accordance with contents of a result by the search; and generating the program information to each of the mobile terminal apparatuses in the predetermined region.

### BRIEF DESCRIPTION OF THE DRAWINGS

Fig. 1 is a block diagram showing a construction of an information distribution system according to the invention;
Fig. 2 is a block diagram showing a construction of a cellular phone of the system of Fig. 1;
Fig. 3 is a diagram showing specific contents of a database of restaurant information;
Fig. 4 is a diagram showing mesh areas in a region (cell);
Fig. 5 is a sequence diagram showing the restaurant information distributing operation of the system of Fig. 1;
Fig. 6 is a diagram showing a display example on a display unit of the cellular phone;
Fig. 7 is a sequence diagram showing another restaurant information distributing operation of the system of Fig. 1;
Fig. 8 is a block diagram showing a construction of an information distribution system according to the invention;
Fig. 9 is a sequence diagram showing the restaurant information distributing operation of the system of Fig. 8;
Fig. 10 is a sequence diagram showing another restaurant information distributing operation of the system of Fig. 8;
Fig. 11 is a block diagram showing a construction of an information distribution system according to the invention;
Fig. 12 is a diagram showing a structure of a database of the system of Fig. 11;
Fig. 13 is a sequence diagram showing the store information distributing operation of the system of Fig. 11;
Fig. 14 is a sequence diagram showing another store information distributing operation of the system of Fig. 11;
Fig. 15 is a sequence diagram showing another store information distributing operation of the system of Fig. 11;
Fig. 16 is a sequence diagram showing another store information distributing operation of the system of Fig. 11;
Fig. 17 is a diagram showing contents of restaurants as a database;
Fig. 18 is a block diagram showing a construction of an information distribution system according to the invention;
Fig. 19 is a sequence diagram showing the store information distributing operation of the system of Fig. 18;
Fig. 20 is a sequence diagram showing another store information distributing operation of the system of Fig. 18; and
Fig. 21 is a sequence diagram showing another store information distributing operation of the system of Fig. 18.

### DETAILED DESCRIPTION OF THE PREFERRED EMBODIMENTS

An embodiment of the invention will now be described in detail hereinbelow with reference to the drawings.

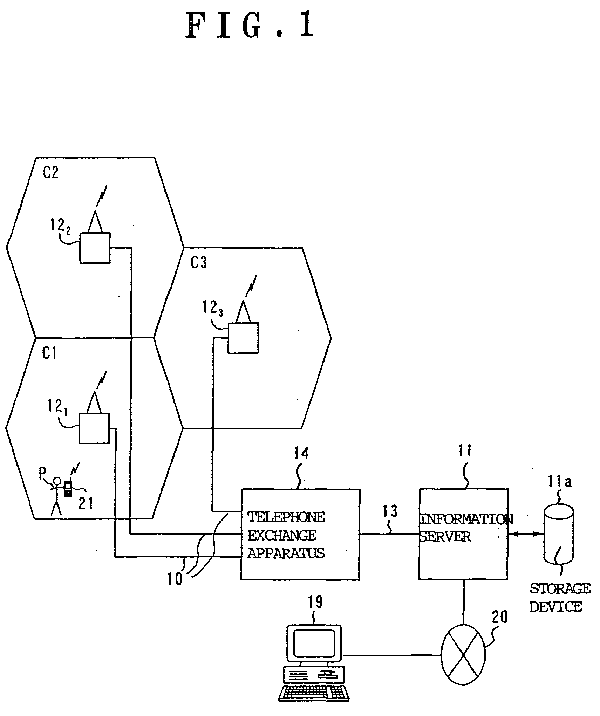

Fig. 1 shows a fundamental construction of an information distribution system according to the invention. The information distribution system comprises: an information server 11; a plurality of base station apparatuses 12₁ to 12₃; a telephone exchange apparatus 14; and a portable terminal apparatus (hereinafter, referred to as a cellular phone) 21. A cellular phone provider (for example, a telephone and telegraph company) who runs cellular phone business possesses the information server 11, a plurality of base station apparatuses 12₁ to 12₃, and telephone exchange apparatus 14. The user P possesses the cellular phone 21 by making a contract with the cellular phone provider. In the embodiment, although only the cellular phone 21 is shown for simplicity of explanation, the invention is not limited to it but a plurality of cellular phones can be also used.

The base station apparatuses 12₁ to 12₃ are apparatuses for relaying transmission and reception signals for cellular phones and data and arranged every small regions C1 to C3 called cells. Although only the three base station apparatuses 12₁ to 12₃ are shown in Fig. 1, a number of base station apparatuses exist actually. The base station apparatuses 12₁ to 12₃ form a network in which they are connected to the telephone exchange apparatus 14 as a center by each dedicated line 10. The information server 11 is connected to the telephone exchange apparatus 14 through a dedicated line 13.

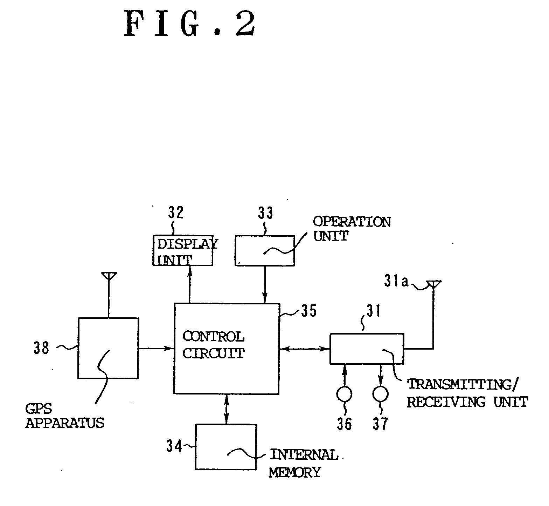

The cellular phone 21 is a mobile terminal apparatus having a function as a cellular phone. Its schematic construction is as shown in Fig. 2. That is, the cellular phone 21 is constructed by: a transmitting/receiving unit 31 for a radio telephone and data communication; a display unit 32; an operation unit 33; a memory 34; and a control circuit 35 comprising a CPU (Central Processing Unit). Besides an antenna 31a, a microphone 36 for telephone transmission and a speaker 37 for telephone reception are connected to the transmitting/receiving unit 31. The cellular phone 21 has a GPS (Global Positioning System) apparatus 38 to detect a present location of the apparatus itself. The control circuit 35 is connected to the transmitting/receiving unit 31, display unit 32, operation unit 33, memory 34, and GPS apparatus 38 and controls the whole operation of the cellular phone 21.

A radio wave which is transmitted or received by the cellular phone 21 is received by one of the base station apparatuses 12₁ to 12₃.

The information server 11 is a server for providing information regarding a favorite to the user of the cellular phone. The information server 11 has a storage device 11a outside. A database is formed in the storage device 11a. Naturally, the storage device 11a can be also provided in the information server 11.

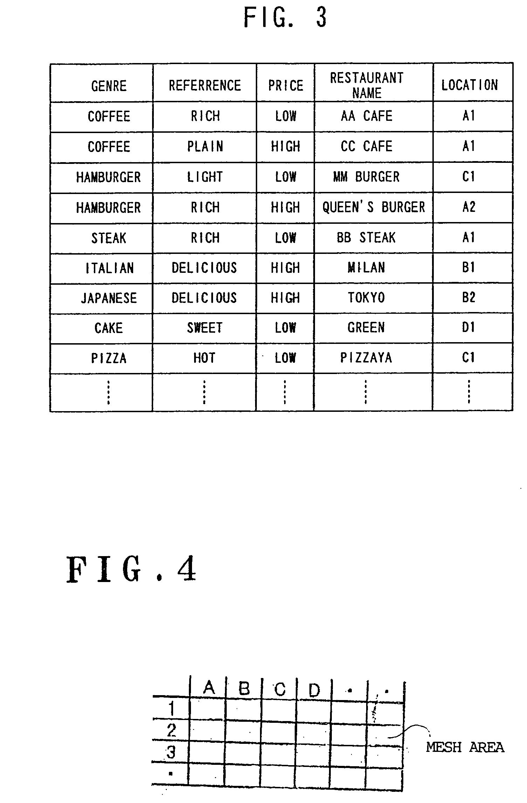

As contents in the database, that is, as presentation information regarding the favorite of the user, in the embodiment, restaurant information is shown every genre, preference, price, restaurant name, and location as shown in Fig. 3. A menu of each store of the restaurant and map data showing the location of the store are also included in the restaurant information.

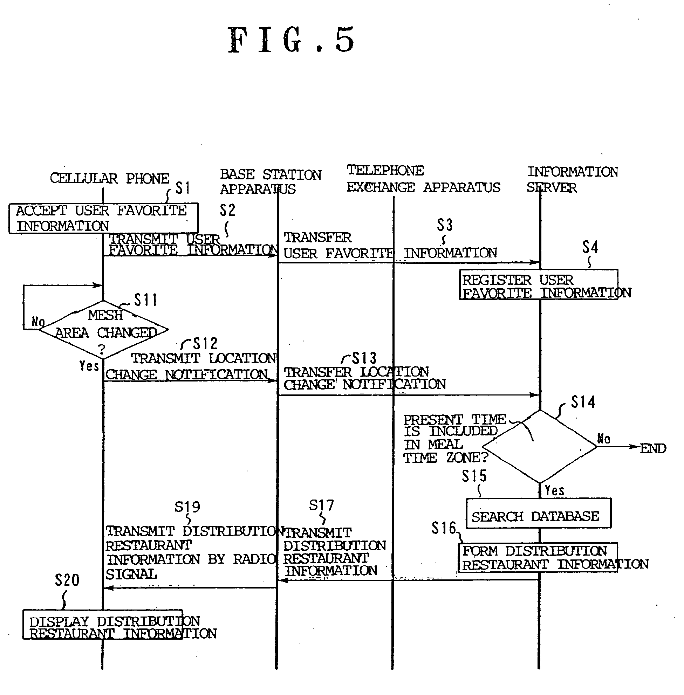

As shown in Fig. 4, the location is shown by an area obtained by dividing a cell into mesh areas having a mesh shape. Each of the mesh areas is specified by a mesh area code comprising alphabetic characters A, B, C,···· and numerals 1, 2, 3,····. The present location of the cellular phone 21 is detected by the GPS apparatus 38 as one of the mesh areas. The detected present location is written as a mesh area code into the memory 34. If the mesh area (area obtained by the division into the mesh-shape) is changed due to the movement of the cellular phone 21, the mesh area code in the memory 34 is updated. A cell identification code (cell ID code) of each cell is also recorded into the memory 34.

The user of each cellular phone has previously registered user favorite information therein. The user favorite information is data showing search conditions (desired conditions) from the database and has been stored into the storage device 11a every terminal ID code. As search conditions in the case of the restaurant information, at least one of the genre, preference, and price is determined. A meal time zone of each of three meals of the user is also registered as a search condition of the restaurant information. The terminal ID code is an ID code for specifying the cellular phone, that is, the user and has previously been allocated every cellular phone. In the cellular phone 21, the terminal ID code has been recorded in the memory 34.

Upon registration of the user favorite information, it is possible to use a method whereby the cellular phone recognizes the ordinary action of its user, collects it, and periodically supplies a result of the collection to the information server 11 or a method whereby if the cellular phone has an electronic settlement function, contents of a purchase are discriminated, user favorite information is collected on the basis of them, and a result of the collection is periodically supplied to the information server 11. The user favorite information is not limited to the favorite of the user but can also include concerning information such as target location of the movement, age, family, or the like regarding the user.

In the information distribution system with the construction, in the case where the cellular phone 21 is moved together with the user P and the mesh area is changed, restaurant information of the new mesh area is distributed in accordance with the registered conditions of the user P. The restaurant information distributing operation will now be described with reference to Fig. 5.

The control circuit 35 of the cellular phone 21 accepts the user favorite information in accordance with the operation input from the operation unit 33 (step S1) and transmits a registering request of the user favorite information to the information server 11 (step S2). The registering request of the user favorite information is received by one of the plurality of base station apparatuses 12₁ to 12₃. The received registering request is further transferred to the information server 11 through the telephone exchange apparatus 14 (step S3). When the registering request of the user favorite information is received, the information server 11 stores the user favorite information into the storage device 11a (step S4). Since the terminal ID code is included in the registering request, the user favorite information is stored into the storage device 11a as a combination with the terminal ID code.

Although the example of registering the user favorite information from the cellular phone 21 to the information server 11 has been shown, as shown in Fig. 1, it is also possible to supply the user favorite information from a fixed terminal apparatus 19 such as a personal computer to the information server 11 through an Internet 20 and register the user favorite information. In this case, the user of the cellular phone 21 accesses the information server 11 by the cellular phone 21, receives a predetermined password from the information server 11 by the cellular phone 21, thereafter, accesses the information server 11 from the fixed terminal apparatus 19 through the Internet 20, enters the predetermined password to thereby specify the user, and registers the user favorite information.

After the user favorite information is registered as mentioned above, the control circuit 35 of the cellular phone 21 discriminates at every predetermined period whether the present location has been changed to another mesh area or not (step S11). If the present location has been changed to another mesh area due to the movement of the cellular phone 21, a notification indicative of the location change is transmitted through the transmitting/receiving unit 31 and antenna 31a (step S12). The terminal ID code, the cell ID code, and a new mesh area code are included in the location change notification. The location change notification can be also transmitted when the present location reaches a location near another mesh area.

The location change notification is received by one of the plurality of base station apparatuses 12₁ to 12₃ and the received location change notification is further transferred to the information server 11 through the telephone exchange apparatus 14 (step S13).

When the location change notification is received, the information server 11 reads out the search condition data of the meal time zone corresponding to the terminal ID code included in the location change notification from the storage device 11a and discriminates whether the present time is included in the meal time zone or not (step S14). If the present time is included in the meal time zone, the search condition data regarding the genre, preference, and price corresponding to the terminal ID code is read out from the storage device 11a, and the database of the restaurant information in the storage device 11a is searched in accordance with the read-out search condition data and the cell ID code and mesh area code included in the received location change notification (step S15). According to the search in step S15, if the present mesh area is, for example, A1, the restaurant which satisfies the search condition data of the user is detected in the mesh area A1. For example, in the case of the database in Fig. 3, under the search condition data such that the genre is "COFFEE" and the price is "LOW", the restaurant name "AA CAFE" is searched in the mesh area A1.

In the information server 11, distribution restaurant information according to a search result in step S15 is formed, for example, as a file of a predetermined format (step S16). The distribution restaurant information is transmitted for the cellular phone 21 (step S17). Besides the terminal ID code of the cellular phone 21, data such as restaurant name as a search result, menu, map showing the location of the restaurant, and the like is included in the distribution restaurant information. In step S16, the distribution restaurant information can be also formed by, for example, a mail format such as an SMS (Short Message Service) or the like.

The transmitted distribution restaurant information is transferred through the telephone exchange apparatus 14 to a base station apparatus of the cell where the cellular phone 21 exists (in the case of Fig. 1, base station apparatus 12₁ of the cell C1) and, further, sent as a radio signal to the cellular phone 21 from the base station apparatus in accordance with the terminal ID code included in the distribution restaurant information (step S19).

In the cellular phone 21, when the distribution restaurant information is received by the transmitting/receiving unit 31 through the antenna 31a, the control circuit 35 allows the display unit 32 to display contents based on the distribution restaurant information (step S20).

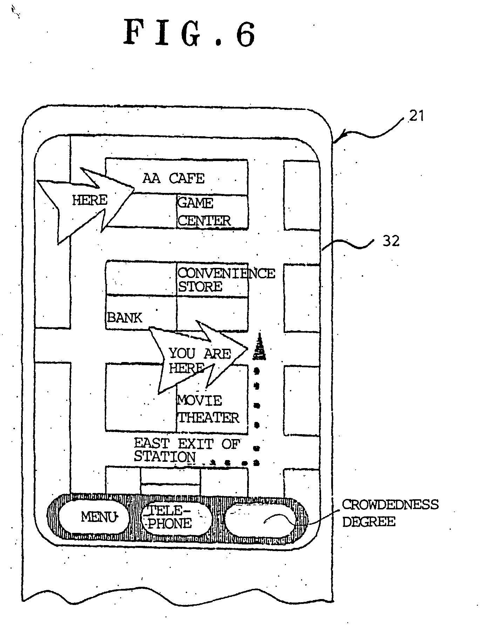

Fig. 6 shows a display example on the display unit 32. In this display example, the location of "AA CAFE" is displayed together with the present location. A "MENU" button, a "telephone" button, and a "crowdedness degree" button are shown in the display example of Fig. 6. When the "MENU" button is pressed, a menu of the "AA CAFE" is displayed, for example, as a menu with an image. When the "CROWDEDNESS DEGREE" button is pressed, a present crowdedness degree of the "AA CAFE" can be known. When the "TELEPHONE" button is pressed, the user can call the "AA CAFE".

Although the fact that the present location of the cellular phone 21 has changed to another mesh area is detected by the discrimination in step S11 in the embodiment, this discrimination can be also made by an apparatus such as a base station apparatus or the like on the cellular phone provider side. That is, the present location data of the cellular phone 21 obtained from the GPS apparatus 38 is sent to the base station apparatus at every predetermined period and the discrimination is made by the base station apparatus. A load on the cellular phone side can be, consequently, reduced.

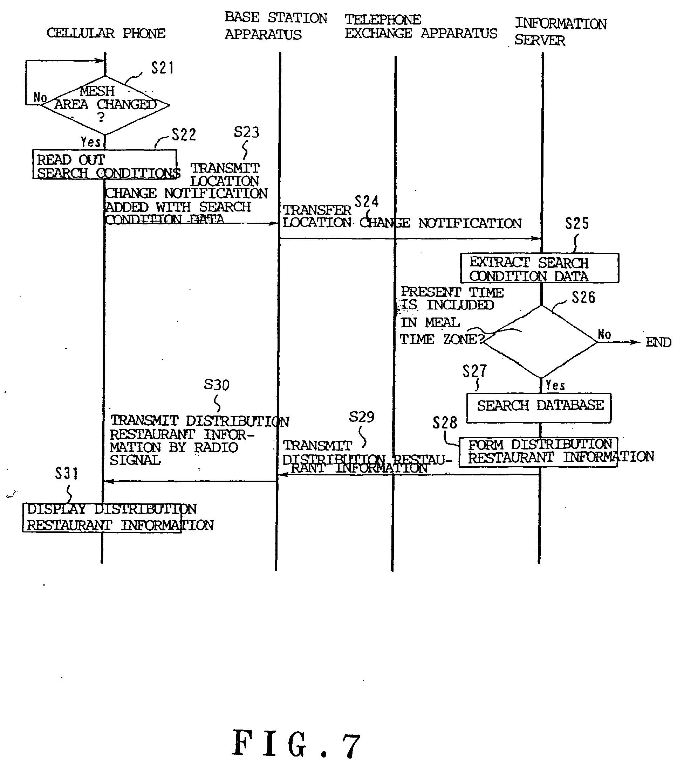

Although the user favorite information of the user of the cellular phone has previously been recorded as search condition data into the storage device 11a on the information server 11 side in the embodiment, the search condition data can be also stored into the memory 34 of the cellular phone 21. Fig. 7 shows the restaurant information distributing operation in the case where the search condition data has been stored into the memory 34 of the cellular phone 21.

In the restaurant information distributing operation in Fig. 7, the control circuit 35 of the cellular phone 21 discriminates at every predetermined period whether the present location has changed to another mesh area or not (step S21). If the present location has changed to another mesh area due to the movement of the cellular phone 21, the search condition data is read out from the memory 34 (step S22). A location change notification added with the search condition data is transmitted through the transmitting/receiving unit 31 and antenna 31a (step S23). Naturally, the terminal ID code, the cell ID code, and anew mesh area code are included in the location change notification in a manner similar to the case of step S12.

The location change notification is received by one of the plurality of base station apparatuses 12₁ to 12₃. The received location change notification is, further, transferred to the information server 11 through the telephone exchange apparatus 14 (step S24).

When the location change notification is received, the information server 11 extracts the search condition data included in the location change notification (step S25) and discriminates whether the present time is included in the meal time zone in the search condition data or not (step S26). If the present time is included in the meal time zone, the database of the restaurant information in the storage device 11a is searched in accordance with the genre, preference, and price in the search condition data and the cell ID code and mesh area code included in the received location change notification (step S27). The searching operation in step S27 is similar to that in step S15 mentioned above.

In the information server 11, distribution restaurant information according to a search result in step S27 is formed, for example, as a file of a predetermined format (step S28). The formed distribution restaurant information is transmitted for the cellular phone 21 (step S29).

The transmitted distribution restaurant information is transferred through the telephone exchange apparatus 14 to a base station apparatus of the cell where the cellular phone 21 exists and, further, sent as a radio signal to the cellular phone 21 from the base station apparatus (step S30).

In the cellular phone 21, when the distribution restaurant information is received by the transmitting/receiving unit 31 through the antenna 31a, the control circuit 35 allows the display unit 32 to display contents based on the distribution restaurant information (step S31).

Processes in steps S28 to S31 are substantially the same as those in steps S16 to S20 mentioned above.

In the restaurant information distributing operation in Fig. 7, since there is no need to register the favorite information of the user of the cellular phone into the information server 11 side, there is an effect such that a memory capacity of the information server 11 or a burden on information administration is reduced.

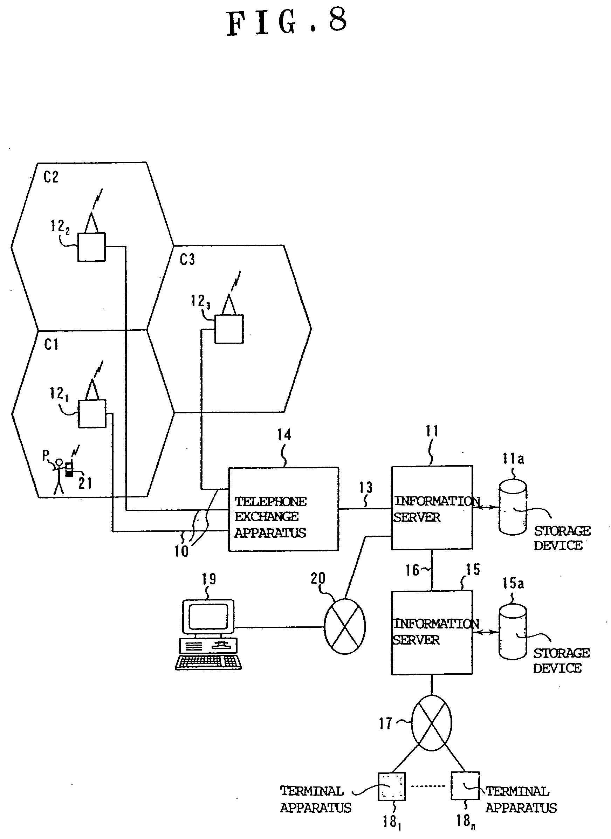

Fig. 8 shows an information distribution system having an information server 15 which the advertisement provider possesses in addition to the construction of the information distribution system in Fig. 1. The information server 15 is connected by a dedicated line 16 to the information server 11 which the cellular phone provider possesses, thereby enabling communication to be performed between the information servers 11 and 15.

In the system of Fig. 8, the information server 11 does not have the database of the restaurant information in the storage device 11a. In place of it, the information server 15 has the database of the restaurant information in a storage device 15a. The database shown in Fig. 3 can be used as a database of the restaurant information formed in the storage device 15a.

Terminal apparatuses 18₁ to 18ₙ which an information provider such as retail shop, restaurant, or the like possesses are connected to the information server 15 through an Internet line network 17. The restaurant information in the database in the storage device 15a is updated by latest information which is sent from each of the terminal apparatuses 18₁ to 18ₙ.

The search condition data as user favorite information has been stored in the storage device 11a on the information server 11 side every terminal ID code.

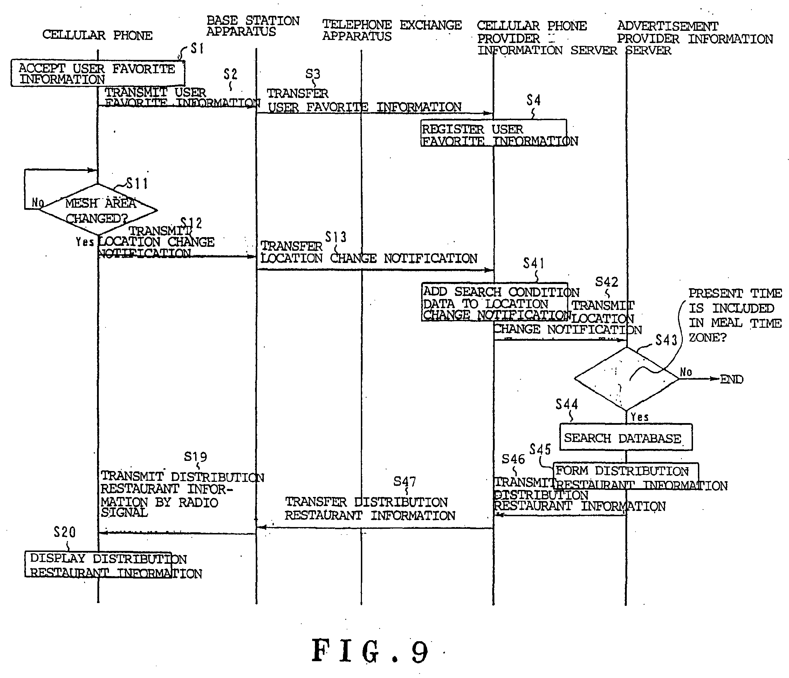

In the information distribution system with the construction shown in Fig. 8, when the cellular phone 21 is moved and the mesh area is changed, restaurant information of the new mesh area is distributed in accordance with the registered conditions of the user. The restaurant information distributing operation will now be described with reference to Fig. 9. In Fig. 9, substantially the same processes in steps as those shown in Fig. 5 are designated by the same step numbers.

The control circuit 35 of the cellular phone 21 discriminates at every predetermined period whether the present location has been changed to another mesh area or not (step S11). If the present location has been changed to another mesh area due to the movement of the cellular phone 21, the location change notification is transmitted through the transmitting/receiving unit 31 and antenna 31a (step S12). The terminal ID code, the cell ID code, and a new mesh area code are included in the location change notification.

The location change notification is received by one of the plurality of base station apparatuses 12₁ to 12₃ and the received location change notification is further transferred to the information server 11 through the telephone exchange apparatus 14 (step S13).

When the location change notification is received, the information server 11 reads out the search condition data corresponding to the terminal ID code included in the location change notification from the storage device 11a and adds the search condition data to the received location change notification (step S41) and transmits the resultant location change notification to the information server 15 (step S42).

When the location change notification is received, the information server 15 extracts the meal time zone from the search condition data included in the location change notification and discriminates whether the present time is included in the meal time zone or not (step S43). If the present time is included in the meal time zone, the database of the restaurant information in the storage device 11a is searched in accordance with the search condition data regarding the genre, preference, and price and the cell ID code and mesh area code included in the received location change notification (step S44). The searching operation in step S44 is similar to that in step S15 by the information server 11 mentioned above.

According to the search of the database in step S44, it is possible to further use one of the following methods: that is, a method whereby advertisement information of an adjacent cell is searched; a method whereby the progressing direction of the user is presumed and advertisement information of a cell matched with the presumed progressing direction is searched; and a method whereby if, for example, a column to register "today's target location" exists in the user concerning information (favorite information), the database is searched when the user has reached the cell at the target location or just before he reaches there, and an advertisement is distributed.

In the information server 15, distribution restaurant information according to a search result in step S44 is formed, for example, as a file of a predetermined format (step S45). The formed distribution restaurant information is transmitted for the cellular phone 21 (step S46).

The transmitted distribution restaurant information is first received by the information server 11, transferred from the information server 11 through the telephone exchange apparatus 14 to a base station apparatus of the cell where the cellular phone 21 exists (step S47) and, further, sent as a radio signal to the cellular phone 21 from the base station apparatus (step S19).

In the cellular phone 21, when the distribution restaurant information is received by the transmitting/receiving unit 31 through the antenna 31a, the control circuit 35 allows the display unit 32 to display contents based on the distribution restaurant information (step S20).

In the restaurant information distributing operation in Fig. 9, since the latest information which cannot be obtained by the cellular phone provider is provided in the database of the information server 15 of the advertisement provider, the latest information can be transmitted as distribution restaurant information to the cellular phone. This is because the database of the information server 15 of the advertisement provider is updated in a real-time manner by the latest information which is sent from each of the terminal apparatuses 18₁ to 18ₙ which the stores such as retail shops or the like possess. By informing the store such as a retail shop or the like of the user favorite information, the information matched with the favorite of the user can be also promptly provided to the user.

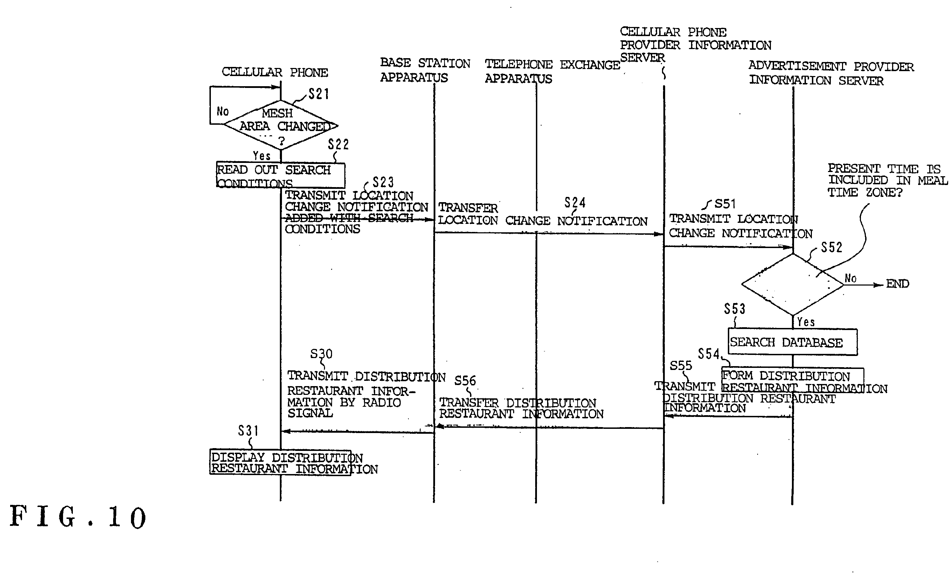

Fig. 10 shows the restaurant information distributing operation in the case where the search condition data has been stored in the memory 34 of the cellular phone 21 in place of the storage device 11a on the information server 11 side in the system shown in Fig. 8. In Fig. 10, substantially the same processes in steps as those shown in Fig. 7 are designated by the same step numbers.

In the restaurant information distributing operation in Fig. 10, the control circuit 35 of the cellular phone 21 discriminates at every predetermined period whether the present location has been changed to another mesh area or not (step S21). If the present location has been changed to another mesh area due to the movement of the cellular phone 21, the search condition data is read out from the memory 34 (step S22). The location change notification added with the search condition data is transmitted through the transmitting/receiving unit 31 and antenna 31a (step S23).

The location change notification is received by one of the plurality of base station apparatuses 12₁ to 12₃ and the received location change notification is further transferred to the information server 11 through the telephone exchange apparatus 14 (step S24). The information server 11 transfers the location change notification to the information server 15 (step S51).

When the location change notification is received, the information server 15 extracts the meal time zone from the search condition data included in the location change notification and discriminates whether the present time is included in the meal time zone or not (step S52). If the present time is included in the meal time zone, the database of the restaurant information in the storage device 11a is searched in accordance with the search condition data regarding the genre, preference, and price and the cell ID code and mesh area code included in the received location change notification (step S53). The searching operation in step S53 is similar to that in step S15 by the information server 11 mentioned above.

In the information server 15, distribution restaurant information according to a search result in step S53 is formed, for example, as a file of a predetermined format (step S54). The distribution restaurant information is transmitted for the cellular phone 21 (step S55).

The transmitted distribution restaurant information is first received by the information server 11 and transferred from the information server 11 through the telephone exchange apparatus 14 to a base station apparatus of the cell where the cellular phone 21 exists (step S56) and, further, sent as a radio signal to the cellular phone 21 from the base station apparatus (step S30).

In the cellular phone 21, when the distribution restaurant information is received by the transmitting/receiving unit 31 through the antenna 31a, the control circuit 35 allows the display unit 32 to display contents based on the distribution restaurant information (step S31).

Processes in steps S30 and S31 are substantially the same as those in steps S19 and S20 mentioned above.

In the restaurant information distributing operation in Fig. 10, since the latest information which cannot be obtained by the cellular phone provider is provided in the database of the information server 15 of the advertisement provider, the latest information can be transmitted as distribution restaurant information to the cellular phone. In a manner similar to the restaurant information distributing operation shown in Fig. 7, since there is no need to register the favorite information of the user of the cellular phone onto the information server 11 side, there is an effect such that the memory capacity of the information server 11 and a burden on the information administration are reduced.

In the restaurant information distributing operation shown in Fig. 10, since the information server 11 merely transfers the location change notification and the distribution restaurant information, the information server 11 is not always necessary. That is, it is also possible to construct the system in a manner such that the location change notification is directly transmitted from the telephone exchange apparatus 14 to the information server 15 without passing through the information server 11 and the distribution restaurant information is directly transmitted from the information server 15 to the telephone exchange apparatus 14 without passing through the information server 11.

In the systems shown in Figs. 1 and 8, although the GPS apparatus 38 has been provided for the cellular phone 21 in order to detect in which one of the mesh areas the present location exists, it is also possible to use a method of receiving a radio wave such as a beacon or the like including location information without limiting to the present location detecting method using the GPS apparatus. It is also possible to construct the system in a manner such that in the base station apparatus of the cell where the cellular phone 21 exists, the present location of the cellular phone 21 is detected at precision of about the mesh area and a code indicative of the detected mesh area is sent to the cellular phone 21. The base station apparatus detects field intensities of the radio waves transmitted from the cellular phone 21 by using a plurality of antennas and can detect the present location of the cellular phone 21 from each detected field intensity at precision of about the mesh area. In the base station apparatus, if the present location of the cellular phone 21 can be detected at precision of about the mesh area, the cellular phone 21 can detect the fact that the present location has been changed to another mesh area in accordance with the code which is sent from the base station apparatus and indicates the mesh area. It is also possible to use both of the method of receiving the radio wave including the location information and the method whereby the base station apparatus detects the present location of the cellular phone by receiving the radio wave from the cellular phone.

In the case where the information has been distributed to the cellular phone, the information server of the cellular phone provider can also transmit the distribution information as it is to the store or the advertisement provider which provided the information or can also transmit information showing the completion of the information distribution thereto. By this method, there are also advantages such that not only it is useful for a charging process regarding the information distribution but also the store can expect or presume the users who will visit the store.

Although the embodiments have been described above with respect to the case where the restaurant information is distributed, advertisement information regarding stores other than the restaurants can be also distributed in accordance with the favorite information of the user. For example, although a discrimination in the case where the favorite information of the user is concerned with the time has been made in step S14, if it is not related with particularly the time, step S14 is omitted. The database according to the favorite information of the user is searched in step S15, the distribution information is formed in accordance with the search result in step S16, and thereafter, it is transmitted and transferred in steps S17 and S19.

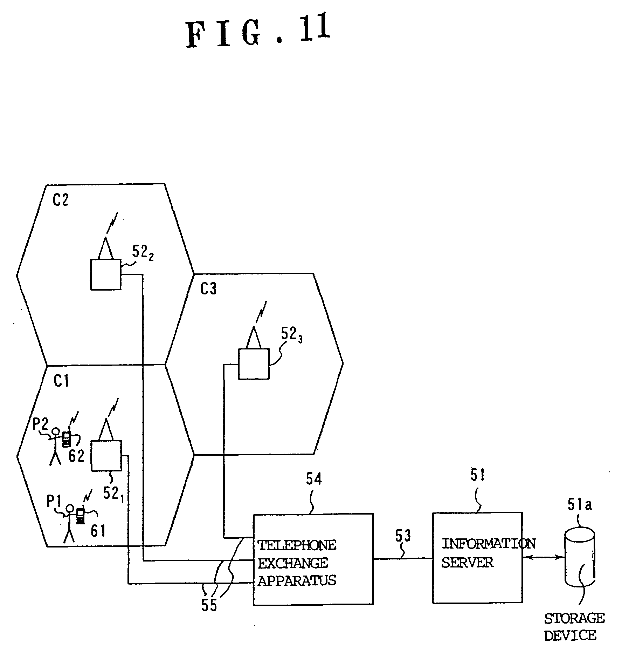

Fig. 11 further shows a fundamental construction of an information distribution system of a type such that information is distributed into the cell according to the invention. The information distribution system comprises: an information server 51; a plurality of base station apparatuses 52₁ to 52₃; a telephone exchange apparatus 54; and cellular phones 61 and 62.

The cellular phone provider who runs cellular phone business possesses the information server 51 and the plurality of base station apparatuses 52₁ to 52₃. Users P1 and P2 possess the cellular phones 61 and 62 by making a contract with the cellular phone provider, respectively. Although only three base station apparatuses have been shown in the embodiment for simplicity of explanation, the number of base station apparatuses is not limited to 3. Similarly, although only the cellular phones 61 and 62 have been shown here with respect to the portable terminal apparatuses, the number of cellular phones is not limited to 2 but a plurality of cellular phones can also exist.

The plurality of base station apparatuses 52₁ to 52₃ are apparatuses for relaying transmission and reception signals for the cellular phones and data and form a network in which they are connected to the telephone exchange apparatus 54 as a center by each dedicated line 55. The information server 51 is connected to the telephone exchange apparatus 54 through a dedicated line 53.

Each of the cellular phones 61 and 62 has a function as a portable telephone. Its schematic construction is similar to that of the cellular phone 21 shown in Fig. 2 except that there is no need to particularly provide the GPS apparatus 38. The distributing range of the information, however, is not limited to the region called a cell but the GPS apparatus 38 can be also provided in the case where one of a plurality of ranges obtained by further finely dividing the cell like a mesh area as shown in Fig. 4 mentioned above is used as a distribution range.

The radio wave which is transmitted and received by each of the cellular phones 61 and 62 is received by one of the base station apparatuses 52₁ to 52₃. Each of the base station apparatuses 52₁ to 52₃ is arranged in predetermined small cells (regions) C1 to C3.

The information server 51 is a server for providing information regarding stores to the users through the cellular phones. The information server 51 has a storage device 51a outside. A database has been formed in the storage device 51a. Naturally, the storage device 51a can be also provided in the information server 51.

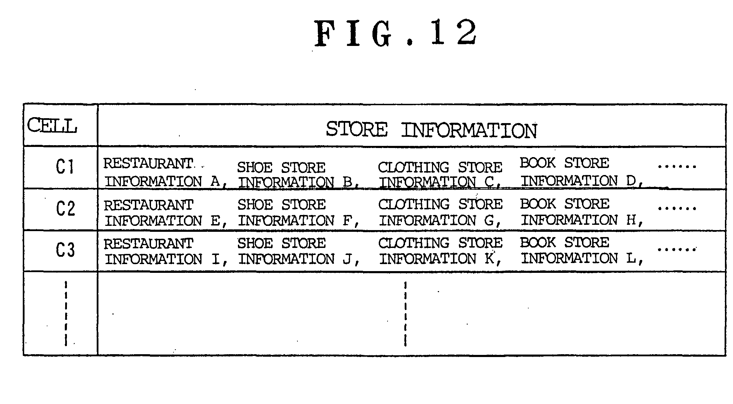

As contents of the database, providing information is formed every cell. In the embodiment, as shown in Fig. 12, store information regarding restaurants, book stores, clothing stores, shoe stores, and the like is formed every cell as providing information. The store information has inherently been provided from information providers such as retail shops or the like. As a specific example of the store information, naturally, map data indicative of a location of the store is included and, in the case of the restaurant, a menu is included. In the case of the retail shops such as clothing store, shoe store, book store, and the like, besides contents of sales articles, information such as notices of bargain sales and the like is included.

Since it is difficult that one information server distributes the store information in all of the cells, the information server 51 of the embodiment distributes the store information in one or a plurality of predetermined cells (at least the cells C1 to C3 of which the base station apparatuses 52₁ to 52₃ are in charge).

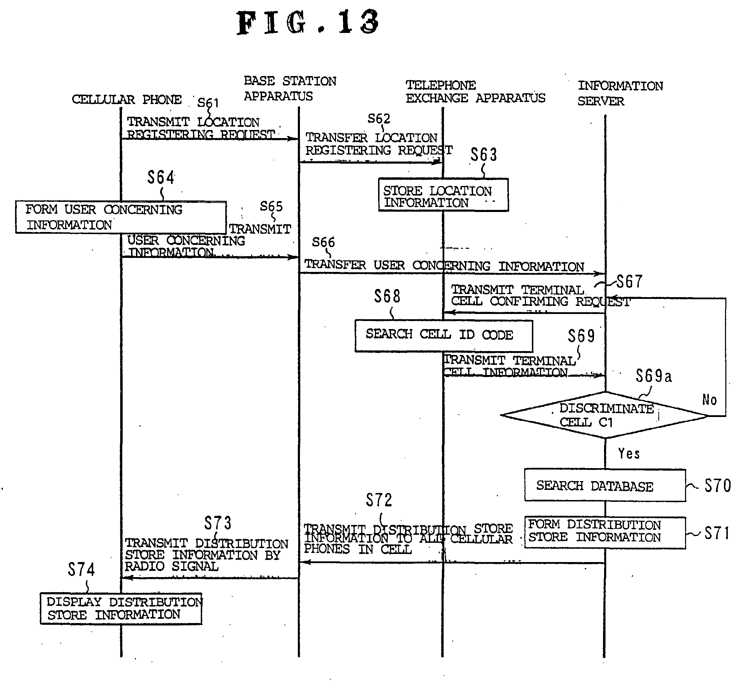

In the information distribution system with the construction, the store information of the cell (the cell C1 in Fig. 11) where the cellular phones 61 and 62 exist at present is distributed into the cell in accordance with the user concerning information of the user P1 or P2. Subsequently, the store information distributing operation will be described with reference to Fig. 13. In the store information distributing operation of Fig. 13, the case where the store information is distributed by the operation by the user P1 of the cellular phone 61 existing in the cell C1 of which the base station apparatus 52₁ is in charge is shown.

In the cellular phone 61, when a power source of the cellular phone 61 is turned on by the operation of a power switch of an operation unit by the user P1, a cell ID code is obtained from the base station apparatus 52₁ of the cell where the cellular phone 61 exists through a control channel by the operation of the control circuit, the cell ID code is stored into a memory, and a location registering request including the cell ID code and the terminal ID code is transmitted to the base station apparatus 52₁ (step S61). The location registering request is transferred from the base station apparatus 52₁ to the telephone exchange apparatus 54 (step S62). In the telephone exchange apparatus 54, the cell ID code and the terminal ID code are stored as a pair into an internal storage device (not shown) as location information of the cellular phone 61 (step S63). The location of the cellular phone 61 is, thus, registered.

After the turn-on of the power source, the location registering request is automatically transmitted from the cellular phone 61 at every predetermined time.

After the location is registered, the user P1 of the cellular phone 61 operates the operation unit in order to request the store information of the region where he is at present, so that the user concerning information showing desired conditions of the user is formed in the cellular phone 61 (step S64). In the operation of the operation unit, a keyword for the necessary information is entered. For example, in the case of the store information regarding the shoe store, a keyword of "shoe" or "shoe store" is entered. The terminal ID code is included together with the keyword in the user concerning information. If the user concerning information has already been entered and has been stored in the memory, the user concerning information is read out from the memory in step S64.

The user concerning information is transmitted from the cellular phone 61 to the base station apparatus 52₁ (step S65) and, further, transferred from the base station apparatus 52₁ to the information server 51 through the telephone exchange apparatus 54 (step S66).

When the user concerning information is received, the information server 51 transmits a terminal cell confirming request to the telephone exchange apparatus 54 in order to confirm the cell in which the cellular phone 61 which issued the user concerning information exists (step S67). The terminal ID code included in the user concerning information is included in the terminal cell confirming request.

When the terminal cell confirming request is received, the telephone exchange apparatus 54 searches the cell ID code which forms a pair together with the terminal ID code included in the terminal cell confirming request (step S68). By this search, the cell ID code which was location-registered in step S63 is read out from the internal storage device. If the cell ID code is obtained as a result of the search, the telephone exchange apparatus 54 transmits terminal cell information including the cell ID code and the terminal ID code to the information server 51 (step S69).

When the terminal cell information is received, the information server 51 discriminates whether the cell ID code included in the received terminal cell information indicates the cell C1 or not (step S69a) and, thereafter, searches the database in accordance with the keyword included in the user concerning information (step S70). The database to be searched is a database for the cell C1. If it is determined as a result of the search of the database that the store information adapted to the keyword exists, distribution store information is formed, for example, as a file of a predetermined format in accordance with the search result in step S70 (step S71). The distribution store information is transmitted for all of the cellular phones existing in the cell shown by the cell ID code included in the user concerning information (step S72).

The transmitted distribution store information is transferred through the telephone exchange apparatus 54 to the base station apparatus 52₁ of the cell C1 where the cellular phone 61 exists and, further, also transmitted as a radio signal from the base station apparatus 52₁ to the cellular phone 61 and the other cellular phone 62 (step S73). Although only the cellular phones 61 and 62 have been shown as cellular phones existing in the cell C1 in the embodiment, the distribution store information is transmitted to all of the cellular phones existing in the cell C1 in step S73.

When the distribution store information is received, the cellular phones 61 and 62 allow the display units to display contents based on the distribution store information (step S74).

For example, if "shoe store" is entered in the cellular phone 61 as a keyword of the user concerning information, in the information server 51, a keyword is searched from the database of the store information by using "shoe store" as a keyword, so that the store information regarding the shoe store is obtained. The store information regarding the shoe store as a search result is supplied as distribution store information to the telephone exchange apparatus 54 and supplied through the base station apparatus 52₁ to the cellular phones 61 and 62. The store information such as location of the shoe store, contents of sales articles, and the like is displayed on each of the cellular phones 61 and 62.

If the cellular phone 61 is moved to a cell other than the cell C1 in association with the movement of the user P1 at a time point of execution of step S73, step S74 is not executed in the cellular phone 61. That is, the distribution store information is transmitted to the cellular phones existing in the cell C1 at the time point of execution of step S73.

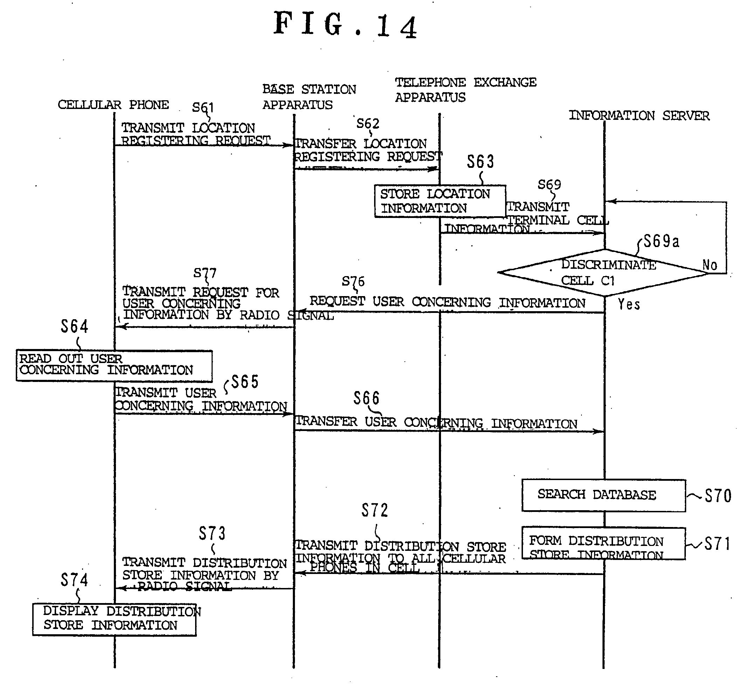

If it is determined that the cellular phone 61 is located in the cell C1 in step S69a, as shown in Fig. 14, it is also possible to construct the system in a manner such that the information server 51 issues a request for obtaining the user concerning information (step S76), the base station apparatus 52₁ transmits the request for obtaining the user concerning information to the cellular phone 61 by a radio signal (step S77), the cellular phone 61 reads out the user concerning information showing the desired conditions of the user from the memory in response to the request (step S64), and steps S65 and S66 are executed subsequently.

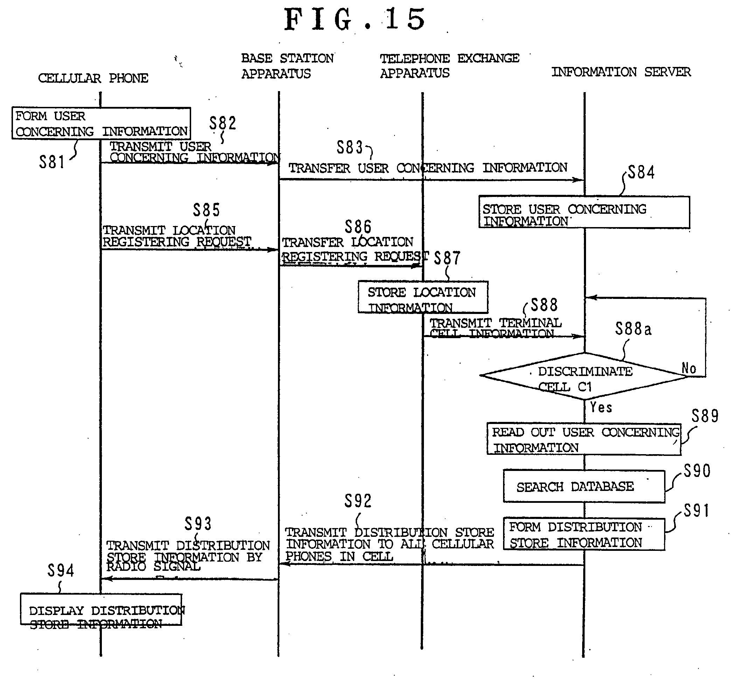

Fig. 15 shows another store information distributing operation in the system of Fig. 11. In the store information distributing operation of Fig. 15, the user concerning information is previously transmitted from the cellular phone 61 to the information server 51 and, thereafter, by registering the location in the cell on the movement destination side, the store information corresponding to the user concerning information is distributed.

Specifically speaking, the user P1 of the cellular phone 61 operates the operation unit in order to request the store information, so that the user concerning information is formed in the cellular phone 61 (step S81). If the user concerning information has already been entered and stored in the memory, the user concerning information is read out from the memory in step S81.

The user concerning information is transmitted from the cellular phone 61 to the base station apparatus of the cell which exists at present (step S82) and, further, transferred from the base station apparatus to the information server 51 through the telephone exchange apparatus 54 (step S83). If the cellular phone 61 exists in the cell C2, the user concerning information is transferred from the cellular phone 61 to the base station apparatus 52₂ and transferred through the telephone exchange apparatus 54 to the information server 51.

When the user concerning information is received, the information server 51 stores the contents of the user concerning information (step S84).

After the user P1 of the cellular phone 61 is moved, for example, from the inside of the cell C2 to the inside of the cell C1, in the cellular phone 61, the cell ID code is obtained through the control channel from the base station apparatus 52₁ of the cell in which the cellular phone 61 exists by the operation of the control circuit automatically or in accordance with the operation of the operation unit by the user P1, the cell ID code is stored into the memory, and the location registering request including the cell ID code and the terminal ID code is transmitted to the base station apparatus 52₁ (step S85). The location registering request is transferred from the base station apparatus 52₁ to the telephone exchange apparatus 54 (step S86). In the telephone exchange apparatus 54, the cell ID code and the terminal ID code are stored as a pair into the internal storage device as location information of the cellular phone 61 (step S87). The location of the cellular phone 61 is, thus, registered.

After completion of the location registration, the telephone exchange apparatus 54 transmits the terminal cell information including the cell ID code and the terminal ID code of the location registration to the information server 51 (step S88).

When the terminal cell information is received, the information server 51 discriminates whether the cell ID code included in the received terminal cell information indicates the cell C1 or not (step S88a) and reads out the user concerning information corresponding to the terminal ID code included in the received terminal cell information (step S89). The user concerning information which is read out in step S89 is the request held in step S84. After the execution of step S89, the database is searched in accordance with the keyword included in the read-out user concerning information (step S90). If it is decided as a search result of the database that the store information adapted to the keyword exists, distribution store information is formed as, for example, a file of a predetermined format in accordance with the search result in step S90 (step S91). The distribution store information is transmitted for all of the cellular phones existing in the cell shown by the cell ID code included in the user concerning information (step S92).

The transmitted distribution store information is transferred through the telephone exchange apparatus 54 to the base station apparatus 52₁ of the cell C1 in which the cellular phone 61 exists and, further, transmitted as a radio signal from the base station apparatus 52₁ to the cellular phone 61 and the other cellular phone 62 (step S93).

When the distribution store information is received, the cellular phones 61 and 62 allow the display units to display the contents based on the distribution store information (step S94).

The processes in steps S90 to S94 are substantially the same as those in steps S70 to S74 in Fig. 14.

If the cellular phone 61 is moved to a cell other than the cell C1 in association with the movement of the user P1 at a time point of execution of step S93, step S94 is not executed in the cellular phone 61. That is, the distribution store information is transmitted to the cellular phones existing in the cell C1 at the time point of execution of step S93.

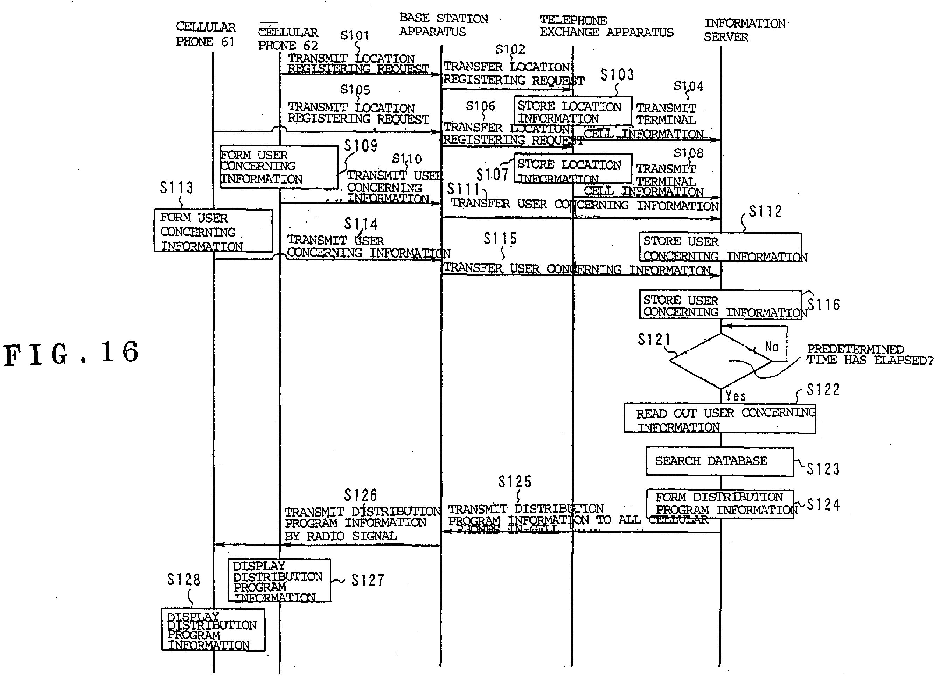

Fig. 16 shows another store information distributing operation in the system of Fig. 11. In the store information distributing operation of Fig. 16, in the information server 51, the search is executed in correspondence to the individual user concerning information from the plurality of cellular phones 61 and 62 existing in the same cell. A program for broadcasting is formed on the basis of each search result and the store information is distributed to the cellular phones 61 and 62.

In the cellular phone 62, the cell ID code is obtained through the control channel from the base station apparatus 52₁ of the cell in which the cellular phone 62 exists by the operation of the control circuit automatically or in accordance with the operation of the operation unit by the user P2, the cell ID code is stored into the internal memory, and the location registering request including the cell ID code and the terminal ID code of the cellular phone 62 is transmitted to the base station apparatus 52₁ (step S101). The location registering request is transferred from the base station apparatus 52₁ to the telephone exchange apparatus 54 (step S102). In the telephone exchange apparatus 54, the cell ID code and the terminal ID code are stored as a pair into the internal storage device as location information of the cellular phone 62 and the location is registered (step S103).

After completion of the location registration, the telephone exchange apparatus 54 transmits the terminal cell information including the cell ID code and the terminal ID code of the location registration of the cellular phone 62 to the information server 51 (step S104).

Also, in the cellular phone 61, the cell ID code is similarly obtained through the control channel from the base station apparatus 52₁ of the cell in which the cellular phone 61 exists by the operation of the control circuit automatically or in accordance with the operation of the operation unit by the user P1, the cell ID code is stored into the internal memory, and the location registering request including the cell ID code and the terminal ID code of the cellular phone 61 is transmitted to the base station apparatus 52₁ (step S105). The location registering request is transferred from the base station apparatus 52₁ to the telephone exchange apparatus 54 (step S106). In the telephone exchange apparatus 54, the cell ID code and the terminal ID code are stored as a pair into the internal storage device as location information of the cellular phone 61 and the location is registered (step S107).

After completion of the location registration, the telephone exchange apparatus 54 transmits the terminal cell information including the cell ID code and the terminal ID code of the location registration of the cellular phone 61 to the information server 51 (step S108).

Either the operating portions in steps S101 to S104 or the operating portions in steps S105 to S108 can be also executed first with respect to the time.

Although not shown in Fig. 16, as shown in Figs. 13 to 15, the information server 51 discriminates whether the cell ID code included in the terminal cell information and sent in steps S104 and S108 indicates the cell C1 or not. If the cell ID code indicates the cell C1, steps S112 and S116, which will be explained hereinlater, are executed.

The user P2 of the cellular phone 62 operates the operation unit in order to request the store information of the region where he is at present, so that the keyword for the necessary information is entered and the user concerning information is formed in the cellular phone 62 in accordance with the keyword (step S109). The user concerning information is transmitted from the cellular phone 62 to the base station apparatus 52₁ (step S110) and, further, transferred from the base station apparatus 52₁ to the information server 51 through the telephone exchange apparatus 54 (step S111). When the user concerning information from the cellular phone 62 is received, the information server 51 holds the user concerning information (step S112).

Similarly, the user P1 of the cellular phone 61 operates the operation unit in order to request the store information of the region where he is at present, so that the keyword for the necessary information is entered and the user concerning information is formed in the cellular phone 61 in accordance with the keyword (step S113). The user concerning information is transmitted from the cellular phone 61 to the base station apparatus 52₁ (step S114) and, further, transferred from the base station apparatus 52₁ to the information server 51 through the telephone exchange apparatus 54 (step S115). When the user concerning information from the cellular phone 61 is received, the information server 51 holds the user concerning information (step S116).

The information server 51 discriminates whether a predetermined time has elapsed or not (step S121). If the predetermined time has elapsed, the user concerning information held within the elapsed predetermined time is read out (step S122). The database is searched every user concerning information in accordance with the keyword included in the user concerning information (step S123). If it is determined as a search result of the database that the store information adapted to each keyword exists, distribution program information according to those store information is formed (step S124).

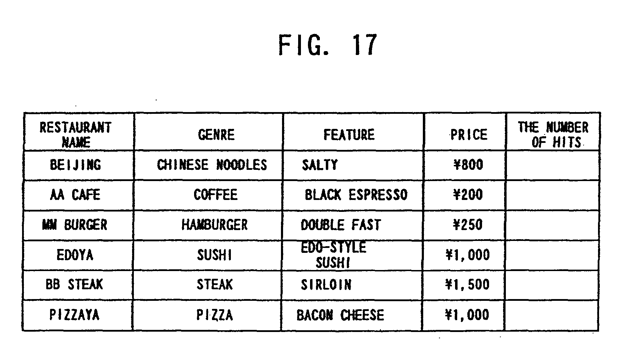

Now, assuming that the database is concerned with the restaurant, that is, a gourmet, a restaurant name, a genre, a feature, a price, and the number of hits have been formed in the storage device 51a every restaurant in the cell C1 as shown in Fig. 17. As a keyword in this case, a free word such as "COFFEE" or "ESPRESSO" is used. With respect to the restaurant to which the keyword is adapted, the number of hits is added and updated in the database. The distribution program information which is formed in step S124 comprises data of X (predetermined number) restaurants in the order from the restaurant of the large number of hits with regard to the restaurants searched on the basis of the keyword in the user concerning information which was received and held within the predetermined time.

After execution of step S124, the information server 51 transmits the distribution program information for all of the cellular phones existing in the cell C1 shown by the cell ID code included in the user concerning information (step S125).

The transmitted distribution program information is transferred through the telephone exchange apparatus 54 to the base station apparatus 52₁ of the cell C1 in which the cellular phones 61 and 62 exist and, further, broadcast-transmitted as a radio signal from the base station apparatus 52₁ to the cellular phones including the cellular phones 61 and 62 in the cell C1 (step S126).

When the distribution program information is received, the cellular phones 61 and 62 allow the display units to display contents based on the distribution program information (steps S127 and S128).

If the cellular phone 61 is moved to a cell other than the cell C1 in association with the movement of the user P1 at a time point of execution of step S126, step S128 is not executed in the cellular phone 61. Similarly, if the cellular phone 62 is moved to a cell other than the cell C1 in association with the movement of the user P2 at a time point of execution of step S126, step S127 is not executed in the cellular phone 62. That is, the distribution store information is broadcast-transmitted to the cellular phones existing in the cell C1 at the time point of execution of step S126.

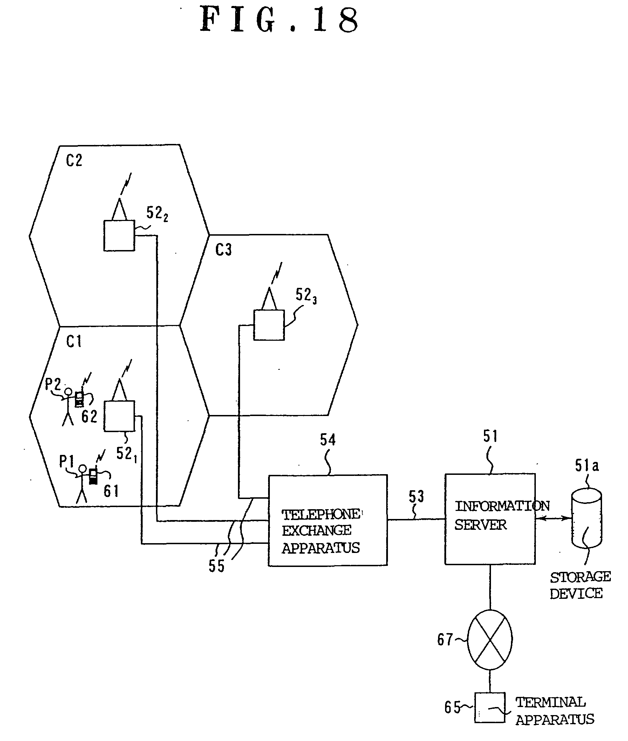

Fig. 18 shows an information distribution system further having a terminal apparatus 65 possessed by the information provider besides the construction of the information distribution system of Fig. 11. The terminal apparatus 65 is connected to the information server 51 through an Internet 67. Although only one terminal apparatus 65 is shown in the embodiment for simplicity of explanation, if there are a plurality of information providers, a terminal apparatus exists every information provider and connected to the information server 51 through the Internet 67. A network between the terminal apparatus 65 and information server 51 is not limited to the Internet 67 but a dedicated line can be also used.

The store information in the database formed in the storage device 51a is updated by latest information which is sent from the terminal apparatus 65.

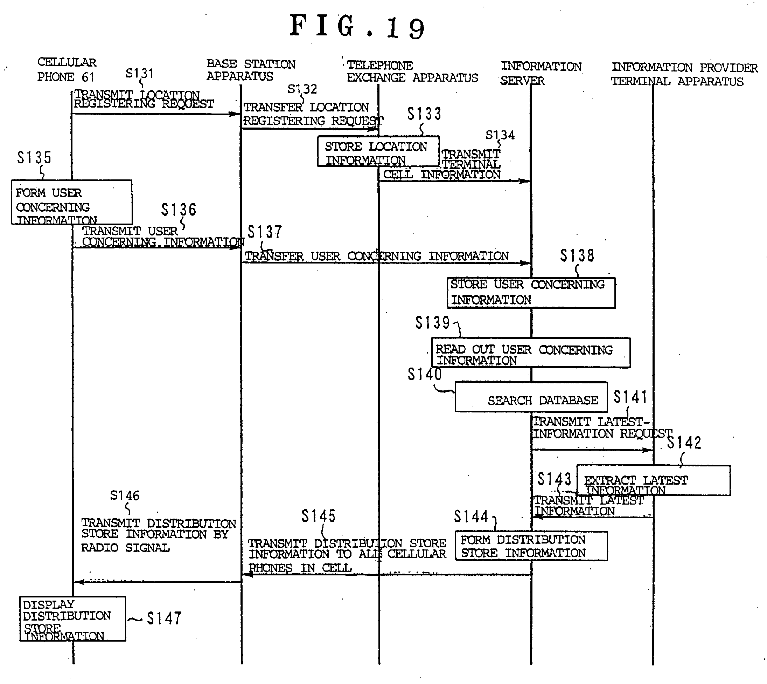

The store information distributing operation of the information distribution system with the construction shown in Fig. 18 will now be described with reference to Fig. 19. In the store information distributing operation of Fig. 19, the case where the store information is distributed by the operation by the user P1 of the cellular phone 61 existing in the cell C1 of which the base station apparatus 52₁ is in charge is shown.

The following operations are substantially the same as those in steps S105 to S108 and S113 to S116 mentioned above, that is: a transmission of the location registering request by the cellular phone 61 (step S131); a transfer of the location registering request (step S132); a location registration by the information server 51 (step S133); a transmission of the terminal cell information to the information server 51 by the telephone exchange apparatus 54 (step S134); a formation of the user concerning information by the cellular phone 61 (step S135); a transmission of the user concerning information from the cellular phone 61 to the base station apparatus 52₁ (step S136); a transfer of the user concerning information from the base station apparatus 52₁ to the information server 51 through the telephone exchange apparatus 54 (step S137); and a reception and holding of the user concerning information in the information server 51 (step S138).

Although not shown in Fig. 19, as shown in Figs. 13 to 15, the information server 51 discriminates whether the cell ID code included in the terminal cell information and sent in step S134 indicates the cell C1 or not and, if the cell ID code indicates the cell C1, subsequent step S138 is executed.

The information server 51 reads out the keyword included in the user concerning information held in step S138 (step S139) and searches the database in accordance with the keyword (step S140).

The information server 51 transmits a latest-information request indicative of the keyword included in the user concerning information to the terminal apparatus 65 (step S141). The latest-information request is transmitted to the terminal apparatus 65 through the Internet 67.

When the latest-information request is received, the terminal apparatus 65 obtains the information which has already been held in the apparatus or the information which was newly entered in response to the latest-information request (step S142) and transmits those information as latest information to the information server 51 (step S143). The latest information is, for example, real-time advertisement information such as time-limited sale or sale in the order of arrival and can be also replaced with information whose contents are changed with the elapse of time or in accordance with a situation of the actual sale. The advertisement information which is transmitted is not always limited to the latest information.

When the latest information is received, the information server 51 forms distribution store information into the latest information in accordance with the information matched with the keyword read out in step S139 and the store information searched in step S140 (step S144). The distribution store information is transmitted for all of the cellular phones existing in the cell indicated by the cell ID code included in the latest-information request (step S145).

The transmitted distribution store information is transferred through the telephone exchange apparatus 54 to the base station apparatus 52₁ of the cell C1 in which the cellular phone 61 exists and, further, transmitted as a radio signal from the base station apparatus 52₁ to the cellular phones including the cellular phones 61 and 62 in the cell C1 (step S146).

When the distribution store information is received, the cellular phones 61 and 62 allow the display units to display contents based on the distribution store information (step S147).

If the cellular phone 61 is moved to a cell other than the cell C1 in association with the movement of the user P1 at a time point of execution of step S146, step S147 is not executed in the cellular phone 61. Similarly, if the cellular phone 62 is moved to a cell other than the cell C1 in association with the movement of the user P2 at a time point of execution of step S146, step S147 is not executed in the cellular phone 62. That is, the distribution store information is transmitted to the cellular phones existing in the cell C1 at the time point of execution of step S146.

In the store information distributing operation of Fig. 19, the user of the cellular phone can obtain not only the store information in the cell C1 regarding the entered keyword but also the real-time latest store information.

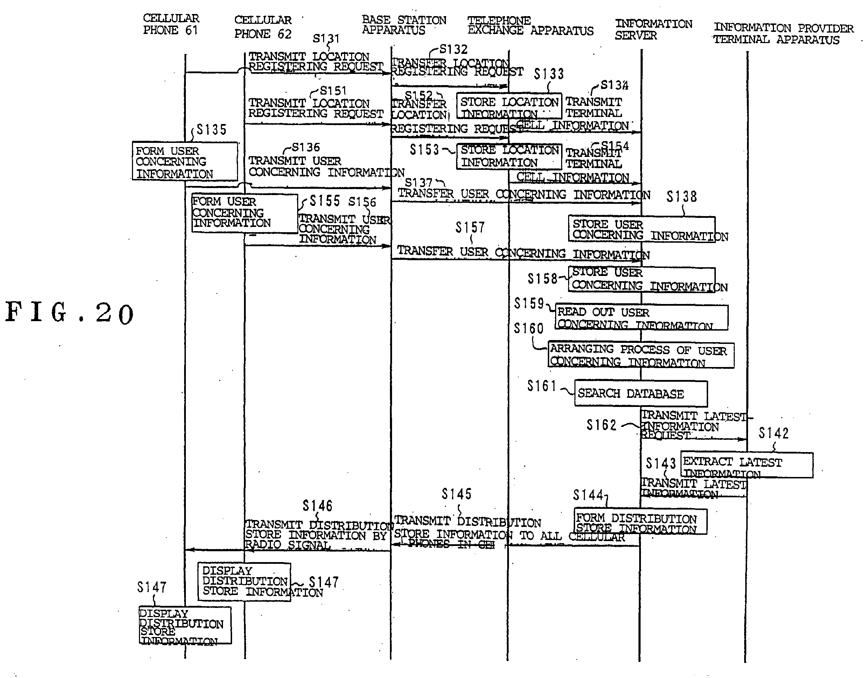

Fig. 20 shows another store information distributing operation in the system of Fig. 18. In the store information distributing operation of Fig. 20, the information server 51 collectively searches the individual user concerning information from the plurality of cellular phones 61 and 62 existing in the same cell and requests the latest information from the terminal apparatus 65 of the information provider. Search results and the latest information are distributed to the cellular phones 61 and 62.

In Fig. 20, steps S131 to S138 relate to the operations of the cellular phone 61 and steps S151 to S158 relate to the operations of the cellular phone 62 corresponding to steps S131 to S138.

Although not shown in Fig. 20, as shown in Figs. 13 to 15, the information server 51 discriminates whether the cell ID code included in the terminal cell information sent by steps S134 and S154 indicates the cell C1 or not. If the cell ID code indicates the cell C1, steps S138 and S158, which will be explained hereinlater, are executed.

After execution of step S158, the information server 51 reads out the user concerning information held in steps S138 and S158 (step S159) and executes an arranging process for the user concerning information (step S160). In the operation in step S160, the keyword included in the user concerning information is modified. Although only the two cellular phones are shown in the embodiment, if there is user concerning information from further many cellular phones, the keywords of the number larger than a threshold value are preferentially used. The information server 51 searches the database in accordance with the modified keyword (step S161).

The information server 51 transmits the latest-information request based on the modified keyword to the terminal apparatus 65 (step S162). The latest-information request is transmitted to the terminal apparatus 65 through the Internet 67.

The subsequent operations are substantially the same as those in steps S142 to S147 mentioned above.

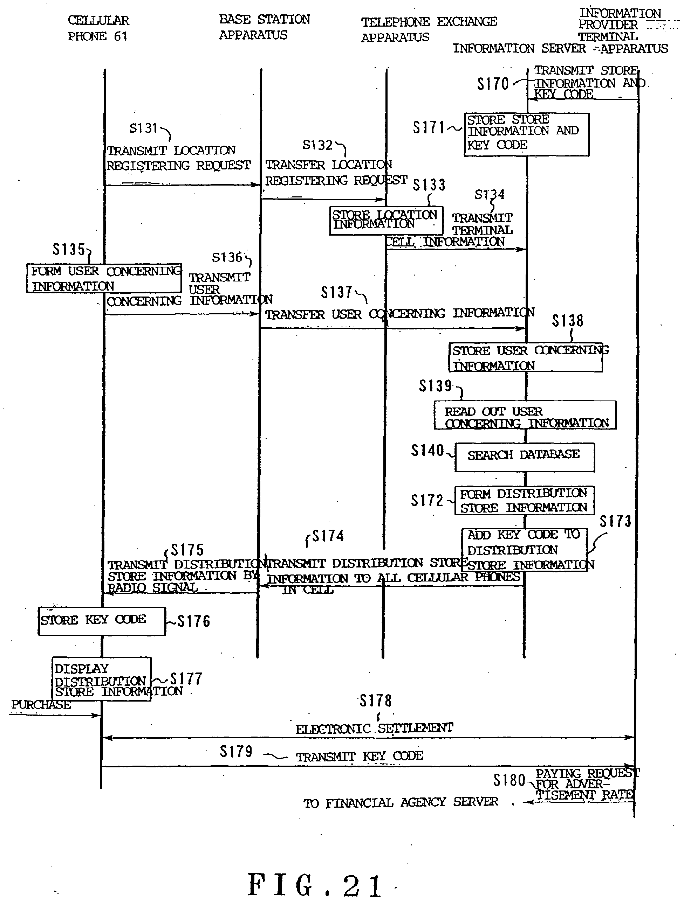

Fig. 21 shows further another store information distributing operation in the system of Fig. 18. In the store information distributing operation of Fig. 21, the case where the store information is distributed by the operation by the user P1 of the cellular phone 61 existing in the cell C1 of which the base station apparatus 52₁ is in charge is shown. In Fig. 21, since the operations in steps S131 to S140 are substantially the same as in the store information distributing operation of Fig. 19, they are designated by the same step numbers.

The key code has previously been transmitted to the information server 51 from the terminal apparatus 65 of the information provider together with the store information for the database (step S170). The key code is held in the storage device 51a together with the store information in correspondence to the store (step S171).

If it is determined as a search result of the database that the store information adapted to the keyword exists, the information server 51 forms the distribution store information in accordance with the search result in step S139 (step S172), adds the key code to the distribution store information (step S173), and transmits the distribution store information added with the key code for all of the cellular phones existing in the cell indicated by the cell ID code included in the user concerning information (step S174).

The transmitted distribution store information added with the key code is transferred through the telephone exchange apparatus 54 to the base station apparatus 52₁ of the cell C1 in which the cellular phone 61 exists and, further, transmitted as a radio signal from the base station apparatus 52₁ to the cellular phones including the cellular phones 61 and 62 in the cell C1 (step S175). When the distribution store information with the key code is received, the cellular phones 61 and 62 hold the key code into the internal memories (step S176) and allow the display units to display contents based on the distribution store information (step S177).

If the user P1 of the cellular phone 61 visits the store or restaurant and has a meal or purchases articles in accordance with the displayed store information, an electronic settlement is performed between the cellular phone 61 and the terminal apparatus 65 of the information provider, for example, by radio communication using Bluetooth (standard of short range radio communication) or communication by a portable radio network (step S178). The key code is transmitted from the cellular phone 61 to the terminal apparatus 65 (step S179). When the key code is received, the terminal apparatus 65 transmits a request for paying an advertisement rate into an account of a financial agency of the cellular phone provider to a financial agency server (not shown) (step S180).

In the store information distributing operation of Fig. 21, when the user of the cellular phone looks at the distribution store information, visits the store or restaurant, and actually purchases articles or has a meal there, the store or restaurant as an information provider pays an advertisement rate to the cellular phone provider.

In the store information distributing operations of Figs. 13 to 16 and Figs. 19 to 21, since the information distribution is performed by the broadcast, the store which provided the information can also receive the distribution information if a power source of the cellular phone is ON. For the store, therefore, there is also an advantage such that if the distribution information is received, it is possible to expect or presume the visit of the users.

In the store information distributing operations of Figs. 13 to 16 and Figs. 19 to 21, the cellular phone existing in the cell to which the store information is transmitted can receive and display the store information. The distribution by the broadcast, however, can be also performed only to the cellular phone of the user who made a contract with the cellular phone provider with respect to the information presentation.

Further, in the store information distributing operations of Figs. 13 to 16 and Figs. 19 to 21, if the cellular phone is moved from the inside of the cell C1 to which the user concerning information has been transmitted to another cell, the store information corresponding to the user concerning information cannot be received. It is possible to broadcast-distribute the store information to the cellular phones existing in the cell C1 and also transmit the store information to the cellular phone which has transmitted the user concerning information by telephone communication. Also in this case, the broadcast-distribution can be performed only to the cellular phone of the user who made a contract with the cellular phone provider with respect to the information presentation.

In the store information distributing operations of Figs. 13 to 16 and Figs. 19 to 21, the cellular phone existing in the cell to which the store information is transmitted can receive and display the store information. The distribution by the broadcast, however, can be also performed only to the cellular phone which exists in the cell to which the store information is transmitted and which has transmitted the user concerning information within a predetermined time.

As mentioned above, according to the invention, the information adapted to the desired conditions of the user can be efficiently distributed to the mobile terminal apparatus.

## Claims

1. An information distribution system comprising a mobile terminal apparatus and an information distributing apparatus owned by a communication provider for distributing information to said mobile terminal apparatus, wherein:
said information distributing apparatus includes database storage means in which information including various contents is stored,
search means for searching the contents of the information in said database storage means in accordance with desired conditions of a user of said mobile terminal apparatus, and
transmitting means for transmitting a radio signal showing the contents of a result of the search by said search means; and
said mobile terminal apparatus includes notifying means for receiving the radio signal to notify the contents of the search result.

2. A system according to claim 1, wherein said desired conditions are conditions regarding a favorite of the user of said mobile terminal apparatus.

3. A system according to claim 1 or 2, wherein a designation of movement of said mobile terminal apparatus is included in the desired conditions.

4. A system according to one of claims 1, 2 or 3, wherein said search means searches the contents of the information in said database storage means in accordance with the desired conditions of the user of said mobile terminal apparatus and a present location of said mobile terminal apparatus.

5. A system according to one of claims 1 to 4, wherein said information distributing apparatus has previously obtained the desired conditions from the user of said mobile terminal apparatus to store the desired conditions.

6. A system according to one of claims 1 to 5, wherein said mobile terminal apparatus includes:
input means for accepting the desired conditions; and
transmitting means for transmitting the desired conditions accepted by said input means to said information distributing apparatus.

7. A system according to one of claims 1 to 6, wherein advertisement information is included as the various contents stored in said database storage means.

8. A system according to claim 7, wherein the advertisement information is information collected by an advertisement provider from each store.

9. A system according to one of claims 1 to 8, wherein said information distributing apparatus includes:
a plurality of base station apparatuses each of which is arranged in a cell and relays communication with the mobile terminal apparatus in the cell;
a telephone exchange apparatus connected to said base station apparatuses; and
an information server which is connected to said telephone exchange apparatus and has said database storage means and said search means, and
said base station apparatuses and said telephone exchange apparatus construct said transmitting means.

10. A system according to claim 4, wherein the present location of said mobile terminal apparatus is detected by location detecting means.

11. A system according to claim 10, wherein said location detecting means is included in said information distributing apparatus and detects one of a plurality of cells as the present location of said mobile terminal apparatus in accordance with a radio wave transmitted from said mobile terminal apparatus.

12. A system according to claim 11, wherein the present location of said mobile terminal apparatus is detected on a unit basis of a mesh area obtained by dividing each of the cells into mesh-shaped areas.

13. A system according to claim 10, wherein said location detecting means is installed in said mobile terminal apparatus, receives a radio wave including location information to detect the present location of said mobile terminal apparatus.

14. A system according to claim 13, wherein said location detecting means is a GPS (Global Positioning System) apparatus installed in said mobile terminal apparatus.

15. A system according to one of the preceding claims, wherein
said mobile terminal apparatus has location change detecting means for transmitting a location change notification to said information distributing apparatus when it is detected that a present location of said mobile terminal apparatus has been changed from a position out of a predetermined area to a position in the predetermined area, and
said search means starts the searching operation in response to said location change notification.

16. A system according to claim 15, wherein the predetermined area is detected on a cell unit basis.

17. A system according to claim 16, wherein said predetermined area is detected on a mesh area unit basis.

18. A system according to one of claims 15 to 17, wherein said location change detecting means transmits the location change notification to said information distributing apparatus when it is detected that the present location has been changed to a position near the predetermined area.

19. A system according to one of claims 15 to 18, wherein said location change notification includes a terminal ID code for identifying said mobile terminal apparatus, a cell ID code for identifying each cell, and a mesh area code indicative of a new mesh area.

20. A system according to one of the preceding claims, wherein
said desired conditions include a condition regarding a time, and said search means discriminates whether a present time satisfies the time condition or not and executes the searching operation in accordance with a result of the discrimination.

21. A system according to claim 3, wherein said search means discriminates whether the designation of the movement is within a predetermined area or not and executes the searching operation in accordance with a result of the discrimination.

22. An information distribution system comprising a mobile terminal apparatus, an information distributing apparatus owned by a communication provider for distributing information to said mobile terminal apparatus, and an advertisement provider apparatus for collecting information including various contents, wherein:
said advertisement provider apparatus includes database storage means in which the various contents are stored and search means for searching the contents of the information in said database storage means in accordance with desired conditions of a user of said mobile terminal apparatus;
said information distributing apparatus includes transmitting means for transmitting a radio signal showing the contents of a result of the search of said search means; and
said mobile terminal apparatus includes notifying means for receiving the radio signal to notify the contents of the search result.

23. A system according to claim 22, wherein said search means searches the contents of the information in said database storage means in accordance with the desired conditions of the user of said mobile terminal apparatus and a present location of said mobile terminal apparatus.

24. A system according to claim 22 or 23, wherein said advertisement provider apparatus collects the various contents from a terminal apparatus installed in each store and stores the collected contents into said database storage means.

25. A system according to claim 24, wherein
said advertisement provider apparatus transmits the desired conditions of the user of said mobile terminal apparatus to the terminal apparatus installed in each store, and
said terminal apparatus transmits the various contents corresponding to the desired conditions of the user of said mobile terminal apparatus to said advertisement provider apparatus.

26. An information server for distributing information to a mobile terminal apparatus, comprising:
database storage means in which information including various contents is stored;
search means for searching the contents of the information in said database storage means in accordance with desired conditions of a user of said mobile terminal apparatus; and
output means for outputting the contents of a result of the search of said search means to said mobile terminal apparatus.

27. A server according to claim 26, wherein said search means searches the contents of the information in said database storage means in accordance with the desired conditions of the user of said mobile terminal apparatus and a present location of said mobile terminal apparatus.

28. A mobile terminal apparatus comprising:
transmitting means for transmitting a location change notification when it is detected that a present location has been changed from a position out of a predetermined area to a position in the predetermined area; and
notifying means for receiving a radio signal and notifying information included in the received radio signal.

29. An apparatus according to claim 28, wherein the predetermined area is detected on a cell unit basis.

30. An apparatus according to claim 29, wherein the predetermined area is detected on a unit basis of a mesh area obtained by dividing each cell into mesh-shaped areas.

31. An apparatus according to one of claims 28 to 30, further comprising input means for accepting desired conditions of a user, and
wherein said transmitting means adds the desired conditions accepted by said input means to the location change notification and transmits the added notification.

32. An Information distributing method for distributing information to a mobile terminal apparatus, comprising the steps of:
storing information including various contents as a database;
searching the information contents of the database in accordance with desired conditions of the user of said mobile terminal apparatus; and
transmitting the contents of a result of the search to said mobile terminal apparatus.

33. A control method for a mobile terminal apparatus, comprising the steps of:
transmitting a location change notification when it is detected that a present location has been changed from a position out of a predetermined area to a position in the predetermined area; and
receiving a radio signal and notifying information included in the received radio signal.

34. An information distribution system comprising: a first mobile terminal apparatus for transmitting user concerning information showing desired conditions of a user by a first radio signal; and an information distributing apparatus of a communication provider for collecting the user concerning information by receiving the first radio signal transmitted by said first mobile terminal apparatus in a predetermined region and for distributing information in accordance with the collected user concerning information, wherein
said information distributing apparatus includes database storage means in which information including various contents has been stored,
search means for searching the contents of the information in said database storage means in accordance with the desired conditions of the user indicated by the collected user concerning information, and
transmitting means for transmitting a second radio signal showing the contents of a result of the search by said search means to mobile terminal apparatuses in the predetermined region, and
each of said mobile terminal apparatuses in the predetermined region includes notifying means for receiving the second radio signal to notify the contents of the search result included in the received radio signal.

35. A system according to claim 34, wherein said information distributing apparatus includes:
discriminating means for discriminating whether said first mobile terminal apparatus exists in the predetermined region or not; and
means for, when it is determined by said discriminating means that said first mobile terminal Apparatus exists in the predetermined region, collecting the user concerning information by receiving the first radio signal transmitted from said first mobile terminal apparatus.

36. A system according to claim 34 or 35, wherein said search means searches the contents of the information in said database storage means in accordance with the predetermined region and the desired conditions of the user.

37. A system according to one of claims 34 to 36, wherein said transmitting means transmits the second radio signal to the mobile terminal apparatuses in the predetermined region, each of which is owned by each user who has a contract with the communication provider concerning information service.

38. A system according to one of claims 34 to 37, wherein said transmitting means transmits the second radio signal to said mobile terminal apparatuses in the predetermined region or to the mobile terminal apparatuses each of which owned by each user who has a contract with the communication provider concerning information service and transmits the second radio signal to said first mobile terminal apparatus irrespective of the presence or absence of said first mobile terminal apparatus in the predetermined region.

39. A system according to one of claims 34 to 38, wherein
said information distributing apparatus includes transmission requesting means for transmitting a transmitting request of the user concerning information to said first mobile terminal apparatus, and
said first mobile terminal apparatus transmits the first radio signal in response to the transmitting request.

40. A system according to claim 39, wherein said transmission requesting means transmits the transmitting request when a movement of said first mobile terminal apparatus into the predetermined region is detected.

41. A system according to one of claims 34 to 40, wherein said information distributing apparatus includes:
a base station apparatus for relaying communication with said mobile terminal apparatuses in the predetermined region;
a telephone exchange apparatus connected to said base station apparatus; and
an information server which is connected to said telephone exchange apparatus and has said database storage means and said search means, and
said base station apparatuses and said telephone exchange apparatus construct said transmitting means.

42. A system according to claim 41, wherein:
said first mobile terminal apparatus transmits a location registering request including a terminal ID code for identifying said first mobile terminal apparatus and a cell ID code indicative of a region where said first mobile terminal apparatus exists;
said telephone exchange apparatus obtains the location registering request through said base station apparatus and stores the terminal ID code and the cell ID code as a pair; and
said information server identifies the region where said first mobile terminal apparatus exists by obtaining the cell ID code, as terminal cell information, corresponding to said first mobile terminal apparatus from said telephone exchange apparatus.

43. A system according to one of claims 34 to 42, further comprising an information provider apparatus for providing advertisement information,
and wherein:
said information distributing apparatus transmits an information request showing the desired conditions of the user to said information provider apparatus;
said information provider apparatus transmits advertisement information corresponding to said information request to said information distributing apparatus; and
said transmitting means adds the advertisement information obtained from said information provider apparatus to the contents of the search result by said search means and transmits the second radio signal showing the added contents.

44. A system according to one of claims 34 to 43, wherein:
said transmitting means adds a key code indicative of an information provider to the contents of the search result by said search means and transmits the second radio signal showing the added contents to said mobile terminal apparatuses in the predetermined region;
when an electronic settlement is performed by one of said mobile terminal apparatuses in the predetermined region on the basis of the contents of the search result by said search means, the one mobile terminal apparatus transmits the key code to an information provider apparatus by a third radio signal; and
said information provider apparatus executes a paying process of an advertisement rate to the communication provider in response to the key code of the third radio signal.

45. An information distribution system comprising: a plurality of first mobile terminal apparatuses each for transmitting user concerning information showing desired conditions of a user by a first radio signal; and an information distributing apparatus of a communication provider for collecting the user concerning information by receiving the first radio signals transmitted individually from said plurality of first mobile terminal apparatuses in a predetermined region and distributing information in accordance with the collected user concerning information, wherein:
said information distributing apparatus includes database storage means in which information including various contents is stored,
search means for searching the contents of the information in said database storage means in accordance with the same conditions of a predetermined number or more of the desired conditions shown by the collected user concerning information, and
transmitting means for transmitting a second radio signal showing the contents of a result of the search by said search means to mobile terminal apparatuses in the predetermined region; and
each of said mobile terminal apparatuses in the predetermined region includes notifying means for receiving the second radio signal to notify the contents of the search result.

46. A system according to claim 45, wherein said information distributing apparatus includes:
discriminating means for discriminating whether each of said plurality of first mobile terminal apparatuses exists in the predetermined region or not; and
means for collecting the user concerning information by receiving the first radio signals transmitted from the first mobile terminal apparatuses which exist in the predetermined region in a result of the discrimination by said discriminating means.

47. A system according to claim 45 or 46, wherein
said information distributing apparatus includes transmission requesting means for transmitting a transmitting request of the user concerning information to said plurality of first mobile terminal apparatuses, and
each of said plurality of first mobile terminal apparatuses transmits the first radio signal in response to the transmitting request.

48. A system according to one of claims 45 to 47, wherein said search means
searches the contents of the information in said database storage means in accordance with the same conditions of a predetermined number or more of the desired conditions shown by the collected user concerning information within a predetermined time.

49. A system according to one of claims 45 to 48, wherein said transmitting means transmits the second radio signal to the mobile terminal apparatuses in the predetermined region corresponding to said plurality of first mobile terminal apparatuses.

50. An Information distribution system comprising,: a plurality of first mobile terminal apparatuses each for transmitting user concerning information showing desired conditions of a user by a first radio signal; and an information distributing apparatus of a communication provider for collecting the user concerning information by receiving the first radio signals transmitted individually from said plurality of first mobile terminal apparatuses in a predetermined region and distributing information in accordance with the collected user concerning information, wherein:
said information distributing apparatus includes database storage means in which information including various contents is stored,
search means for searching the contents of the information in said database storage means in accordance with the desired conditions shown by the collected user concerning information,
means for forming program information in accordance with the contents of a result of the search by said search means, and
transmitting means for transmitting the program information to mobile terminal apparatuses in the predetermined region by a second radio signal; and
each of said mobile terminal apparatuses in the predetermined region includes notifying means for receiving the second radio signal to notify the program information.

51. A system according to claim 50, wherein said information distributing apparatus includes:
discriminating means for discriminating whether each of said plurality of first mobile terminal apparatuses exists in the predetermined region or not; and
means for collecting the user concerning information by receiving the first radio signals transmitted from said first mobile terminal apparatuses which exist in the predetermined region in a result of the discrimination by said discriminating means.

52. A system according to claim 50 or 51, wherein said search means searches the contents of the information in said database storage means in accordance with the predetermined region and the desired conditions shown by the collected user concerning information.

53. A system according to one of claims 50 to 52, wherein said transmitting means transmits the program information by the second radio signal to the mobile terminal apparatus in the predetermined region, each of which owned by each user who has a contract with the communication provider concerning information service.

54. A system according to one of claims 50 to 53, wherein said transmitting means transmits the second radio signal to said mobile terminal apparatuses in the predetermined region or to the mobile terminal apparatuses each of which owned by each user who has a contract with the communication provider concerning information service and transmits the second radio signal to said first mobile terminal apparatus irrespective of the presence or absence of said first mobile terminal apparatus in the predetermined region.

55. A system according to one of claims 50 to 54, wherein:
said information distributing apparatus includes transmission requesting means for transmitting a transmitting request of the user concerning information to said plurality of first mobile terminal apparatuses; and
each of said plurality of first mobile terminal apparatuses transmits the first radio signal in response to said transmitting request.

56. A system according to one of claims 50 to 55, wherein said transmission requesting means transmits the transmitting request for each of said plurality of first mobile terminal apparatuses when the movement of said first mobile terminal apparatus into the predetermined region is detected.

57. A system according to one of claims 50 to 56, wherein said information distributing apparatus includes:
a base station apparatus for relaying communication with saidmobile terminal apparatuses in the predetermined region;
a telephone exchange apparatus connected to said base station apparatus; and
an information server which is connected to said telephone exchange apparatus and has said database storage means and said search means, and
said base station apparatuses and said telephone exchange apparatus construct said transmitting means.

58. A system according to claim 57, wherein:
each of said plurality of first mobile terminal apparatuses transmits a location registering request including a terminal ID code for identifying each of said plurality of first mobile terminal apparatuses and a cell ID code indicative of a region where each of said plurality of first mobile terminal apparatuses exists;
said telephone exchange apparatus obtains the location registering request through said base station apparatus and stores the terminal ID code and the cell ID code as a pair; and
said information server identifies the region where each of said plurality of first mobile terminal apparatuses exists by obtaining the cell ID code, as terminal cell information, corresponding to each of said first mobile terminal apparatuses from said telephone exchange apparatus.

59. A system according to one of claims 50 to 58, further comprising an apparatus for an information provider for providing advertisement information,
and wherein:
said information distributing apparatus transmits an information request showing the desired conditions to said information provider apparatus;
said information provider apparatus transmits the advertisement information corresponding to the information request to said information distributing apparatus; and
said transmitting means adds the advertisement information obtained from said information provider apparatus to said program information and transmits the added resultant information.

60. A system according to one of claims 50 to 59, wherein:
said transmitting means adds a key code indicative of the information provider to the program information and transmits the added resultant information to the mobile terminal apparatuses in the predetermined region by the second radio signal;
when an electronic settlement is performed by one of the mobile terminal apparatuses in the predetermined region on the basis of the program information, the one first mobile terminal apparatus transmits the key code to an information provider apparatus by a third radio signal; and
said information provider apparatus executes a paying process of advertisement rates to said communication provider in response to the key code of the third radio signal.

61. A system according to one of claims 50 to 60, wherein said transmitting means transmits the second radio signal to the mobile terminal apparatuses in the predetermined region corresponding to said plurality of first mobile terminal apparatuses.

62. An information server for collecting user concerning information showing desired conditions of a user of a mobile terminal apparatus existing in a predetermined region and distributing information in accordance with the collected user concerning information, comprising:
database storage means in which information including various contents is stored;
search means for searching the contents of the information in said database storage means in accordance with the desired conditions shown by the collected user concerning information; and output means for outputting the contents of a result of the search by said search means to the mobile terminal apparatus in the predetermined region.

63. A server according to claim 62, further comprising:
discriminating means for discriminating whether said mobile terminal apparatus exists in the predetermined region or not; and
means for, when it is determined by said discriminating means that said mobile terminal apparatus exists in the predetermined region, collecting the user concerning information by receiving a radio signal transmitted from said mobile terminal apparatus.

64. A server according to claim 62 or 63, wherein said search means searches the contents of the information in said database storage means in accordance with the predetermined region and the desired conditions.

65. A mobile terminal apparatus comprising:
input means for accepting desired conditions of a user;
transmitting means for transmitting user concerning information showing the desired conditions of the user accepted by said input means by a first radio signal; and
notifying means for receiving a second radio signal and notifying information included in the second radio signal.

66. An information server for collecting user concerning information showing desired conditions of a user of each of a plurality of mobile terminal apparatuses existing in a predetermined region and distributing information in accordance with the collected user concerning information, comprising:
database storage means in which information including various contents is stored;
search means for searching the contents of the information in said database storage means in accordance with the desired conditions of the user shown by the collected user concerning information;
means for forming program information in accordance with the contents of each result of the search of said search means; and
output means for outputting the program information to the mobile terminal apparatuses in the predetermined region.

67. A server according to claim 66, further comprising:
discriminating means for discriminating whether each of said plurality of mobile terminal apparatuses exists in the predetermined region or not; and
means for collecting the user concerning information by receiving a radio signal transmitted from each of said mobile terminal apparatuses which exists in the predetermined region in a result of the discrimination by said discriminating means.

68. An information distributing method of collecting user concerning information showing desired conditions of a user of each mobile terminal apparatus existing in a predetermined region and distributing information in accordance with the collected user concerning information, comprising the steps of:
storing information including various contents as a database;
searching the contents of said database in accordance with the desired conditions shown by the collected user concerning information; and
generating the contents of a result of the search by the mobile terminal apparatus in the predetermined region.

69. A control method for a mobile terminal apparatus, comprising the steps of:
accepting desired conditions of a user;
transmitting user concerning information showing the accepted desired conditions of the user by a first radio signal; and
receiving a second radio signal and notifying information included in the second radio signal.

70. An information distributing method of collecting user concerning information showing desired conditions of a user of each of a plurality of mobile terminal apparatuses existing in a predetermined region and distributing information in accordance with the collected user concerning information, comprising the steps of:
storing information including various contents as a database;
searching the contents of said database in accordance with the desired conditions shown by the collected user concerning information;
forming program information in accordance with contents of a result by the search; and
generating the program information to each of said mobile terminal apparatuses in the predetermined region.

71. A method according to claim 70, further comprising the steps of:
discriminating whether each of said plurality of mobile terminal apparatuses exists in the predetermined region or not; and
collecting the user concerning information by receiving radio signals transmitted from each of said mobile terminal apparatuses which exists in the predetermined region in a result of the discrimination.
